# EUROPÄISCHE PATENTANMELDUNG

(11) **EP 1 385 344 A1**
(43) Veröffentlichungstag der Anmeldung: **28.01.2004**
(21) Anmeldenummer: 02016655.9
(22) Anmeldetag: 25.07.2002
(51) Int. Cl.: H04Q 7/30

(54) **Verfahren zum Steuern einer Basistransceiverstation, die von einer Basisstationssteuereinrichtung abgesetzt und autonom betrieben wird**

(71) Anmelder: SIEMENS AKTIENGESELLSCHAFT, 80333 München (DE)
(72) Erfinder: Ball, Carsten, Dr., 76764 Rheinzabern (DE); Deinzer, Arnulf, Prof., 87435 Kempten (DE)

(57) **Zusammenfassung**

Die Erfindung bezieht sich auf ein Verfahren und Vorrichtungen in einem Kommunikationssystem zum Steuern einer von einer Ressourcen-Verwaltungseinrichtung (BSC,PCU) abgesetzten autonomen Sende- und/oder Empfangseinrichtung bzw. Transceivereinrichtung (BTS). Dabei soll ein Abwärtsverbindungs-Datenpaket (DLP^{*}) und ein Aufwärtsverbindungs-Datenpaket (ULP^{*}) jeweils um eine zusätzliche Steuerinformation (ZID bzw. ZIU) erweitert auf der Übertragungsstrecke zwischen der Ressourcen-Verwaltungseinrichtung (BSC) und der Transceivereinrichtung (BTS) übertragen werden und die Transceivereinrichtung (BTS) das von der teilnehmerseitigen Station (MS) empfangene Aufwärtsverbindungs-Datenpaket (ULP) gemäß einer solchen zuvor von der Ressourcen-Verwaltungseinrichtung (BSC) im Abwärtsverbindungs-Datenpaket (DLP^{*}) empfangenen zusätzlichen Steuerinformation (ZID) verarbeiten.

## Beschreibung

Die Erfindung bezieht sich auf ein Verfahren zum Steuern einer von einer Ressourcen-Verwaltungseinrichtung abgesetzten autonomen Sende- und Empfangseinrichtung in einer Funkzelle mit den oberbegrifflichen Merkmalen des Patentanspruchs 1 sowie Stationen zum Durchführen eines solchen Verfahrens.

Funkkommunikationssysteme erlauben neben verbindungsorientierter Datenübermittlung, die vornehmlich für die Übertragung von Sprachinformationen vorgesehen ist, auch paketorientierte Datenübermittlung, deren Anwendungsbereich überwiegend durch die Übermittlung von Dateninformationen gegeben ist. Beispielsweise werden in GSM-Mobilfunksystemen paketorientierte Dienste durch GPRS (General Packet Radio Services) bereitgestellt. GPRS ermöglicht theoretisch eine Datenübertragungsrate von 182 kb/s. In der Praxis mit handelsüblichen 3 bzw. 4 Zeitschlitz-Mobiles beträgt die Datenübertragungsrate jedoch maximal nur etwa 60 bis 80 kb/s.

Mobilfunksysteme der dritten Generation erfordern jedoch insbesondere für Multimediaanwendungen eine größere Bandbreite. EDGE (Enhanced Data Rates for GSM Evolution) stellt eine evolutionäre Weiterentwicklung von GSM dar und bietet die Möglichkeit, durch Einführung eines neuen Modulationsverfahrens die geforderten höheren Datenraten zu realisieren. Durch EDGE werden Datenübertragungsraten von etwa 384 kb/s, theoretisch bis zu 470 kbps) ermöglicht. In der Praxis werden mit 3 bzw. 4 Zeitschlitz-Mobiles Datenraten von bis zu 180 bzw. 240 kbps erzielt. In EDGE enthalten sind die Komponenten EGPRS (Enhanced General Packet Radio Services) für paketorientierte Dienste und ECSD (Enhanced Circuit Switched Connections) für verbindungsorientierte Dienste. EDGE ist von der ETSI (European Telecommunications Standard Institut) standardisiert und ist für die Frequenzbänder 900 mHz, 1800 mHz, 1900 mHz, 850 mHz und 450 mHz vorgesehen. Dies bedeutet, dass EDGE in allen GSM-Frequenzbändern ohne Lizensierungsprobleme für bestehende GSM-Mobilfunknetzbetreiber genutzt werden kann. Der ETSI EDGE-Standard stellt mit Link Adaptation und Incremental Redundancy zwei Verfahren zur effizienteren Nutzung der Funkschnittstelle durch Verbindungsqualitätssteuerung (LQC: Link Quality Control) bereit.

Link Adaptation sieht die Anpassung eines Modulations- und Codierschemas an die auf der Funkschnittstelle gemessenen Übertragungsbedingungen vor. Durch das Modulations- und Codierschema werden unter anderem Modulationsverfahren, Datenübertragungsrate und Coderate festgelegt. Mögliche Modulationsverfahren sind das bei GSM übliche GMSK (Gaussian Minimum Shift Keying) und das leistungsfähigere 8PSK (Phase Shift Keying). Bei 8PSK handelt es sich um ein lineares Modulationsverfahren, bei dem drei aufeinanderfolge Bit auf ein Symbol abgebildet werden, woraus sich acht verschiedene Symbolarten ergeben. Schlägt eine Übermittlung eines Datenblocks fehl, so wird dieser Datenblock gemäß dem RLC-Protokoll (Radio Link Control) verworfen und eine erneute Übermittlung mit einem gleichbleibenden oder durch die Link Adaptation veränderten Modulations- und Codierschema wird angefordert. Der EDGE-Standard bietet hier die Möglichkeit der Neu- oder Retransmission eines Datenblocks innerhalb einer Code-Familie. Der Nachteil des Link Adaptation Verfahrens bei EDGE sowie GPRS ist, dass durch den Verwurf der vorhergehenden fehlgeschlagenen Block-Übertragung bereits übermittelte Signalenergie nicht mehr genutzt wird.

Bei Anwendung von Incremental Redundancy werden im Rahmen eines fehlgeschlagenen Übermittlungsversuchs empfangene Datenblöcke gespeichert. Dazu werden für jedes Bit des Datenpakets die entsprechenden Soft-Werte des Equalizers im Empfänger gespeichert, wodurch eine ca. 4 - 8-fache Datenmenge anfällt.

Ist keine erfolgreiche Decodierung unter Hinzunahme im Rahmen früherer fehlgeschlagener Übermittlungsversuche gespeicherter Informationen des gleichen Datenblocks möglich (sogenanntes Joint Decoding), so wird wiederum eine wiederholte Übermittlung des Datenblocks angefordert. Die wiederholte Übermittlung eines Datenblocks erfolgt unter Beibehaltung des Modulations- und Codierschemas bzw. zumindest unter Verwendung eines Modulations- und Codierschemas der gleichen Code-Familie. Dagegen wird die Faltungscodierung für einen wiederholt zu sendenden Datenblock mit einem veränderten Punktierungsschema durchgeführt. Der Vorteil des Verfahrens liegt darin, dass bereits übermittelte Signalenergie nicht verworfen wird und damit nicht verloren geht. Die Wahrscheinlichkeit, einen Block bei einer Retransmission korrekt zu dekodieren steigt durch das Joint Decoding drastisch an, so dass die Systemkapazität deutlich erhöht wird. Der Nachteil besteht darin, dass große Datenmengen direkt im Empfänger gespeichert werden müssen, da eine Übertragung von einer Basisstation zur Basisstations-Steuereinrichtung über die terrestrische Schnittstelle aus Kapazitätsgründen nicht möglich ist.

Aus EP 0 418 866 A2 ist ein Verfahren zur paketorientierten Datenübermittlung in einem Funk-Kommunikationssystem bekannt, bei dem zu übermittelnde Daten in Datenblöcke unterteilt, codiert, über eine Funkschnittstelle übertragen und decodiert werden. Eventuelle fehlgeschlagene Übermittlungsversuche werden beim Decodieren erkannt. Es wird eine erneute Übermittlung eines Datenblocks angefordert, der bei einem fehlgeschlagenen Übermittlungsversuch eines Datenblocks gesendet wurde. Ein fehlerhafter Datenblock, der bei einem fehlgeschlagenen Übermittlungsversuch eines Datenblocks empfangen wurde, wird in einem Speicher gesammelt. Ein zu sendender Datenblock wird stets mit einer die Reihenfolge des Datenblocks innerhalb eines Datenpakets kennzeichnenden Blocksequenznummer versehen. Diese Blocksequenznummer dient der Identifizierung eines Datenblocks, um für diesen bei einem Übermittlungsfehler anhand seiner Blocksequenznummer gezielt eine erneute Übermittlung anfordern zu können.

Aus der WO 01/43331 A1 ist ein Verfahren zur paketorientierten Datenübermittlung bei hohen Datenraten bekannt, welches eine effiziente Ausnutzung von in einem Funk-Kommunikationssystem zur Verfügung stehender Speicher- und Rechenkapazität ermöglicht. Dabei wird im Fall einer wiederholten Datenblockübermittlung eine die wiederholte Übermittlung kennzeichnende Information in den erneut zu sendenden Datenblock eingetragen, bevor dieser Datenblock über die Funkschnittstelle übertragen wird. Außerdem wird eine erneute Übermittlung eines Datenblocks angefordert, der bei einem fehlgeschlagenen Übermittlungsversuch gesendet wurde. Ein Datenblock, der bei einem fehlgeschlagenen Übermittlungsversuch empfangen wurde, wird empfängerseitig in einem Speicher gesammelt. Hervorzuheben ist dabei, dass bei einer erstmaligen Übermittlung eines Datenblocks ein Durchsuchen des Speichers nach Datenblöcken entfallen kann, die bei früheren fehlgeschlagenen Übermittlungsversuchen gesammelt wurden. Ein Durchsuchen des Speichers kann beispielsweise im Rahmen einer Fehlerbehebung oder bei einer Aktualisierung des Speichers erforderlich sein.

EDGE/EGPRS unterstützt sowohl die Link Adaption bzw. Verbindungsanpassung als auch eine Kombination aus Verbindungsanpassung und inkrementaler Redundanz (Inkrementell redundanzfähig), wobei letztere als sogenannte Hybride ARQ-Typ-II-Strategie bezeichnete wird. Bei der inkrementalen Redundanz wird ein ursprünglich in der Sende- und/oder Empfangseinrichtung empfangener Datenblock unter Verwendung einer verbundenen Decodierung (Joint Decoding) mit sowohl der Information des momentan empfangenen Datenblocks als auch mit einer redundanten Information fehlerhafter Blöcke, die von vorherigen Übertragungen im Speicher abgespeichert sind, rekonstruiert. Dadurch kann die Anzahl von wiederholten Übertragungen reduziert und der Gesamtdurchsatz vergrößert werden, was insbesondere mit Blick auf höhere EGPRS Modulations- und Codierschemata von Bedeutung ist, die mit geringeren C/I-Werten (C/I: Signal-Interferenz Verhältnis, Störabstand) laufen. Prinzipiell vollführt die reine inkrementale Redundanz die gleichen Aufgaben wie eine reine Verbindungsanpassung. Jedoch ist hinsichtlich Delay-Anforderungen sowie der begrenzten Speicherausstattung von Teilnehmerstationen eine kombinierte Strategie von Link Adaptation und Incremental Redundancy vorzuziehen.. Diese hybride Strategie aus Verbindungsanpassung und inkrementaler Redundanz zieht Vorteile aus beiden Strategien.

Inkrementale Redundanz ist kein Ersatz für Verbindungsanpassung oder eine Leistungssteuerung, sondern hilft aufgrund zeitweilig schlechter Übertragungsbedingungen entstandene kurzzeitige Fehler über einige Abrufperioden, in der Regel nicht länger als eine Sekunde, zu überbrücken und zu korrigieren, ohne dass eine Rechenzeit und signalisierungsaufwändige Verbindungsanpassung nötig wird. Zu berücksichtigen ist allgemein, dass beim Einsatz inkrementaler Redundanz Verzögerungen (delay) im Vergleich zur reinen Verbindungsanpassung erhöht werden können. Die Vorteile inkrementaler Redundanz nehmen mit höheren Verhältnissen von Nicht-Bestätigungsmeldungen relativ zu Bestätigungsmeldungen für empfangene Datenpakete bei schlechten Funkverbindungsbedingungen und/oder bei der Verwendung eines hohen MCS (EDGE Modulations- und Kodierschemata) zu, nehmen jedoch drastisch ab, wenn auch die RLC/MAC-Blockkopfabschnitte (RLC : Radio Link Control); MAC: Media Access Control), welche stabiler als die Daten programmiert sind, durch die schlechten Bedingungen beeinflusst werden. Beide Verfahren benötigen eine Kommunikation zwischen der zentralen Steuereinheit, die in der Sende- und/oder Empfangseinrichtung angeordnet ist, und der Paketsteuereinheit, welche in der Basisstations-Steuereinrichtung zur Steuerung der Sende- und/oder Empfangseinrichtung angeordnet ist, um einen effizienten Betrieb zu ermöglichen.

Für Zwecke der Verbindungsanpassung ist die Kommunikation sehr einfach und es wird lediglich das Transportieren des Codier-/Punktierschemas und anderer Steuerinformation, (z.B. Leistungssteuerung in Abwärtsverbindungen, Kopfabschnittfehler/Nutzlastfehler in Aufwärtsrichtung) über die Paketsteuer-Rahmen inbandig durchgeführt. Dabei ist die Strategie von EGPRS gleich wie die bereits bekannte bei GPRS, wobei einige Erweiterungen und Verbesserungen ins RLC/MAC Protokoll aufgenommen wurden.

Bei inkrementaler Redundanz, insbesondere in Aufwärtsverbindungsrichtung, ist die Signalisierung zwischen der zentralen Steuereinheit in der Sende- und/oder Empfangseinrichtung und der Basisstations-Steuereinrichtung komplexer, da die Sendeund/oder Empfangseinrichtung bei EGPRS keine Kenntnis über die teilnehmerseitige Station auf gemeinsam (shared) verwendeten Paketdatenkanälen (PDCHs)hat, keine Information über eine Mehrschlitz-Belegung einer teilnehmerseitigen Station über verschiedene Paketdatenkanäle hat, keine Information über das Besitzverhältnis bzw. die Zuordnung'eines Funkblocks zu einer bestimmen teilnehmerseitigen Station hat und auch keine Kenntnis hat, ob der Paketabruf in einer Betriebsart mit Bestätigung bzw. Nicht-Bestätigung durchgeführt wird, beispielsweise in der RLC/MAC-Betriebsart. Die Sendeund/oder Empfangseinrichtung ist nämlich für GPRS- bzw. EDGE-Datendienste transparent. Die Sende- und/oder Empfangseinrichtung ist somit von einer intensiven Signalisierung zu der Basisstations-Steuereinrichtung abhängig. Die Sende- und/oder Empfangseinrichtung soll ebenfalls selbständig ihren Speicher verwalten - beispielsweise das Löschen von Speicherbereichen für abgebrochene Paketdatenflüsse einleiten, sowie Konsistenzprüfungen durchführen.

Die Aufgabe der Erfindung besteht darin, ein Verfahren zum Steuern einer von einer Ressourcen-Verwaltungseinrichtung abgesetzten autonomen Sende- und/oder Empfangseinrichtung in einer Funkzelle vorzuschlagen, welches eine autonomere Steuerung der Sende- und/oder Empfangseinrichtung ermöglicht.

Diese Aufgabe wird durch das Verfahren mit den Merkmalen des Patentanspruchs 1 bzw. Vorrichtungen eines Kommunikationssystems zum Durchführen eines solchen Verfahrens mit den Merkmalen der Patentansprüche 18 bzw. 19 gelöst. Vorteilhafterweise wird ein derartiges Verfahren bei GSM mit den Zusatzstandards EDGE und EGPRS eingesetzt.

Bei einem Verfahren zum Steuern einer von einer Ressourcen-Verwaltungseinrichtung abgesetzten autonomen Sende- und Empfangseinrichtung in einer Funkzelle, wobei von der Ressourcen-Verwaltungseinrichtung in einem Abwärtsverbindungs-Datenpaket aus einem Kopfabschnitt und aus einem Datenund/oder Steuerinformationsabschnitt und mit einer zelleindeutigen Identifizierungsinformation eine Steuerinformation über die Sende- und/oder Empfangseinrichtung und über eine Funk-Schnittstelle zu einer teilnehmerseitigen Station in der Zelle gesendet wird, von der teilnehmerseitigen Station ein Aufwärtsverbindungs-Datenpaket aus einem Kopfabschnitt und einem Daten- und/oder Steuerinformationsabschnitt und mit einer zelleindeutigen Identifikationsinformation zu der Sendeund/oder Empfangseinrichtung gesendet werden und von der Sende- und/oder Empfangseinrichtung das Aufwärtsverbindungs-Datenpaket von der teilnehmerseitigen Station verarbeitet und zu der Ressourcen-Verwaltungseinrichtung weitergeleitet wird, falls vorgegebene Empfangsbedingungen für das Aufwärtsverbindungs-Datenpaket erfüllt sind, ist es besonders vorteilhaft, dass das Abwärtsverbindungs-Datenpaket und das Aufwärtsverbindungs-Datenpaket jeweils um zusätzliche Steuerinformationen bzw. Statusinformationen erweitert auf der Übertragungsstrecke zwischen der Ressourcen-Verwaltungseinrichtung und der Sende- und/oder Empfangseinrichtung übertragen werden und die Sende- und/oder Empfangseinrichtung das von der teilnehmerseitigen Station empfangene Aufwärtsverbindungs-Datenpaket gemäß einer solchen zuvor von der Ressourcen-Verwaltungseinrichtung im Abwärtsverbindungs-Datenpaket empfangenen zusätzlichen Steuerinformation verarbeitet. Gleichzeitig ist es angebracht, dass die Steuer- und Statusinformationen in Abwärtsrichtung sowie die Steuer- und Status-Informationen in Aufwärtsrichtung in einem von der Luftschnittstelle vorgegebenen Zeitverhältnis stehen.

Vorteilhafte Ausgestaltungen sind Gegenstand von abhängigen Ansprüchen.

Die zusätzliche Steuer- und Statusinformation auf der Funk-Schnittstelle nicht mit zu übertragen entlastet die Funk-Schnittstelle in Abwärts- sowie Aufwärtsrichtung deutlich.

Zur Aufnahme der zusätzlichen Steuerinformation das Aufwärtsverbindungs-Datenpaket bzw. das Abwärtsverbindungs-Datenpaket bezüglich deren Länge zu erweitern, bietet einen besonders einfachen Weg, zusätzliche Informationen zu übermitteln.

Dass die zusätzlichen Steuerinformationen im Aufwärtsverbindungs-Datenpaket bzw. im Abwärtsverbindungs-Datenpaket eine zelleindeutige teilnehmerstationsspezifische Identifizierungsinformation enthalten, macht eine Zuordnung unabhängig von tatsächlich momentan zugewiesenen Übertragungsressourcen möglich.

Zweckmäßigerweise wird ein eindeutiger zeitlicher Zusammenhang zwischen einem insbesondere von der Sende- und/oder Empfangseinrichtung empfangenen Abwärtsverbindungs-Datenpaket und einem insbesondere nachfolgend von einer teilnehmerseitigen Station empfangenen Aufwärtsverbindungs-Datenpaket festgelegt, wobei dieser zeitliche Zusammenhang insbesondere aus der Zeiteinteilung der Luftschnittstelle abgeleitet werden kann.

Die Steuerinformation auf einen Zustandsparameter für die Verarbeitung in der Sende- und/oder Empfangseinrichtung zu beziehen und mit der zusätzlichen Steuerinformation des Aufwärtsverbindungs-Datenpakets der Ressourcen-Verwaltungseinrichtung eine Zustandsinformation über den Betriebsparameter zu übertragen, ermöglicht der Sende- und/oder Empfangseinrichtung auf einfache Art und Weise, Informationen zu übertragen, die nicht zwingend mit einem ganz bestimmten Datenpaket verbunden sind.

Die vorgegebenen Empfangsbedingungen für das Aufwärtsverbindungs-Datenpaket zur Überprüfung des korrekten Empfangs zu verwenden, ist ein einfaches Verfahren, bei nicht korrektem Empfang eine Anforderung zu einer weiteren, insbesondere wiederholten Übertragung von der Sende- und/oder Empfangseinrichtung an die teilnehmerseitigen Station zu senden.

Bei nicht korrektem Empfang des Aufwärtsverbindungs-Datenpakets in der Sende- und/oder Empfangseinrichtung das empfangende Aufwärtsverbindungs-Datenpaket in einem Speicher zur späteren Verarbeitung bei Bedarf abzuspeichern bietet die Möglichkeit der Anwendung inkrementaler Redundanz. Mittels Steuerinformation kann die Anwendung der Incrementellen Redundanz im Empfänger selektiv für dedizierte Paketdatenflüsse bzw. sogar für dedizierte Pakete eines Paketdatenflusses ein- bzw. ausgeschaltet werden.
Bei nicht korrektem Empfang des Aufwärtsverbindungs-Datenpakets in der Sende- und/oder Empfangseinrichtung durch diese von der teilnehmerseitigen Station eine redundante Übertragung anzufordern, wobei zumindest eine der zusätzlichen Steuerinformationen zur Steuerung der Verarbeitung ursprünglich empfangener und redundanter empfangener Aufwärtsverbindungs-Datenpakete bezogen ist, bietet eine weitere Entlastung der Schnittstelle zwischen der Sende- und Empfangseinrichtung und der Ressourcen verwaltenden Einrichtung.

Bei nicht korrektem Empfang des Aufwärtsverbindungs-Datenpakets in der Sende- und/oder Empfangseinrichtung kann durch diese vorteilhafterweise von der teilnehmerseitigen Station auch eine decodierte Übertragung angefordert werden, wobei zumindest eine der zusätzlichen Steuerinformationen zur Steuerung der Verarbeitung ursprünglich empfangener und decodierter empfangener Aufwärtsverbindungs-Datenpakete geeignet ist.

Die zusätzliche Steuerinformation kann insbesondere zur Speicherverwaltung der Sende- und/oder Empfangseinrichtung verwendet werden und zur Information der Ressourcen-Verwaltungseinrichtung an diese übertragen werden.

Die zusätzliche Information zur Speicherverwaltung der Sendeund/oder Empfangseinrichtung zu verwenden, ermöglicht auch, dass damit Belegungs- und/oder Freigabeanweisungen von der Ressourcen-Verwaltungseinrichtung bezüglich eines Speichers der Sende- und/oder Empfangseinrichtung an diese übertragen werden.

Die Sende- und/oder Empfangseinrichtung BS kann somit auch den Kontroller bzw. die Basisstations-Steuereinrichtung BSC über den aktuellen Zustand ihrer Speicherbelegung informieren und damit beispielsweise eine Link Adaptation für einen dedizierten Paketdatenfluss anfordern. Weitere Statusinformationen beschreiben die Anzahl der abgespeicherten Paketkopien und beispielsweise welche Punktierungsschemata abgespeichert wurden. Zusätzlich werden Information und Metriken über die Qualität der Soft-Bit, die Kanalbedingungen, Empfangsfeldstärke, C/I, Timing Advance etc. übermittelt. Die Basisstations-Steuereinrichtung BSC kann anhand der Statusinformationen Konsistenzprüfungen durchführen und entsprechend in Abwärtsrichtung DL steuernd eingreifen.

Die zusätzliche Steuerinformation kann auch zur Übertragung von Richtungsinformation bezüglich einer Richtantenne der Sende- und/oder Empfangseinrichtung bzw. verbindungsorientiert zur Übertragung einer Lokalisierungsinformation der teilnehmerseitigen Station MS in der Zelle Z verwendet werden.

Die Übertragung des um eine zusätzliche Steuerinformation erweiterten Aufwärtsverbindungs-Datenpaket bzw. Abwärtsverbindungs-Datenpaket erfolgt in besonders Ressourcen schonender Art und Weise inbandig zwischen der Ressourcen-Verwaltungseinrichtung und der Sende- und/oder Empfangseinrichtung, und erfolgt insbesondere verbindungsorientiert.

In der Sende- und/oder Empfangseinrichtung unter Einbezug der zusätzlichen Steuerinformationen eine eigenständige, autonome Durchführung inkrementeller Redundanz durchzuführen vermeidet Signalisierungsaufwand.

Eine entsprechende Sende- und/oder Empfangseinrichtung eines Kommunikationssystems, insbesondere zum Durchführen eines derartigen Verfahrens ist vorteilhafterweise ausgestattet mit einer Sende- und/oder Empfangseinrichtungs-Steuereinrichtung zum Steuern von deren Betriebsablauf und Verarbeiten empfangener und zu Versendender Datenpakete, einer ersten Schnittstelle zum Übertragen der Datenpakete zu einer teilnehmerseitigen Station über eine Funk-Schnittstelle und einer zweiten Schnittstelle zum Übertragen der Datenpakete und von Steuerinformationen zu einer Ressourcen-Verwaltungseinrichtung des Kommunikationssystems. Vorteilhafterweise ist die Sendeund/oder Empfangseinrichtungs-Steuereinrichtung ausgelegt, ein von der teilnehmerseitigen Station empfangenes Aufwärtsverbindungs-Datenpaket um eine zusätzliche Steuerinformation zu Ergänzen und als ergänztes Aufwärtsverbindungs-Datenpaket mit dieser ergänzten Steuerinformation an die Ressourcen-Verwaltungseinrichtung weiterzuleiten.
Eine solche Ressourcen-Verwaltungseinrichtung mit einer Ressourcen-Verwaltungseinrichtungs-Steuereinrichtung zum Übergeordneten Steuern des Betriebs von angeschlossenen der Sendeund/oder Empfangseinrichtungen und zum Verwalten von Ressourcen auf einer Funk-Schnittstelle zwischen der Sende- und/oder Empfangseinrichtung und einer teilnehmerseitigen Station ist besonders vorteilhaft ausgestaltet, wenn ein an die Sendeund/oder Empfangseinrichtung zu übertragendes Abwärtsverbindungs-Datenpaket um eine zusätzliche Steuerinformation zu Ergänzen und als ergänztes Abwärtsverbindungs-Datenpaket mit dieser ergänzten Steuerinformation an die Sende- und/oder Empfangseinrichtung zu deren Steuerung weitergeleitet werden kann.

Anwendungen sind insbesondere bei Verfahren, Sende- und/oder Empfangseinrichtungen bzw. Ressourcen-Verwaltungseinrichtungen in einem Kommunikationssystem gemäß dem Standard General System for Mobile communications , insbesondere gemäß dem Standart Enhanced Data Rates for GSM Evolution und/oder Enhanced General Packet Radio Services umsetzbar. Anwendungen sind auch in anderen Standards zur mobilen Funkkommunikation, insbesondere bei UMTS möglich.

Verfahrensgemäß werden somit die Aufgaben der Sende- und/oder Empfangseinrichtung und der Basisstations-Steuereinrichtung bzw. Ressourcen-Verwaltungseinrichtung unterstützt, um insbesondere inkrementale Redundanz für die Aufwärtsrichtung (Uplink) zu ermöglichen, wobei zusätzliche Kommunikationsinformationstypen zwischen den beiden Einrichtungen für diese Zwecke eingeführt werden. Diese zusätzlichen Informationen werden mit Hilfe der erweiterten Steuerinformation übertragen. Die inkrementale Redundanz ist dabei insbesondere für EDGE-EGPRS vorteilhaft einsetzbar. Die Verfügbarkeit der inkrementalen Redundanz für Verbindungen in Aufwärtsrichtung ist vorteilhafterweise eng mit der Steuerfunktion von EDGE-CU (CU: Carrier Unit, Transceiver) gekoppelt. Weniger handelt es sich dabei um ein Merkmal für GPRS, wobei auch eine diesbezügliche Übertragung nicht prinzipiell ausgeschlossen wird.

Die vorgeschlagene inbandige Signalisierung wird vorteilhafterweise auch bei geschalteten Richtantennen bzw. Smart-Antennen eingesetzt, da die hohen Synergieeffekte zwischen inkrementaler Redundanz und der Annäherung geschalteter Richtstrahlen (switched beam antennas) für Paketdatenübertragung vorteilhaft ausnutzbar sind. Die Strategie für das Verfahren in Verbindung mit inkrementaler Redundanz, Richtantennen sowie Lokalisierungsdiensten beruht auf abgekürzten temporären logischen Verbindungsidentifizierungskennungen, wobei diese Werte von der Basisstations-Steuereinrichtung bzw. der darin angeordneten Paketsteuereinheit zu der Sende- und/oder Empfangseinrichtung über verkettete Paketdatensteuereinheits-Übertragungsrahmen auf z.B. der für sich bekannten Abis-Schnittstelle übermittelt werden können. Diese verkürzten Kennwerte ermöglichen der Sende- und/oder Empfangseinrichtung, einen Überblick über die Besitzverhältnisse zwischen teilnehmerseitigen Stationen in der eigenen Funkzelle und den Funkblöcken, welche in Aufwärtsrichtung bei ihr eintreffen.

Die zusätzliche Steuerinformation (ZIU, ZID) kann in der Sende- und/oder Empfangseinrichtung auf einfache Art und Weise zur Berechnung und Übertragung von Lokalisierungsdaten von Teilnehmern in der Zelle verwendet werden.

In der Sende- und/oder Empfangseinrichtung (BTS) kann vorteilhafterweise unter Einbezug der zusätzlichen Steuerinformationen (ZID, ZIU) eine eigenständige, autonome Durchführung einer Richtantennenausrichtung auf Teilnehmer durchgeführt werden.

Ein Ausführungsbeispiel wird nachfolgend anhand der Zeichnung näher erläutert. Es zeigen:
- Fig. 1: verschiedenartige Einrichtungen eines zellularen Funk-Kommunikationssystems zum Durchführen des bevorzugten Verfahrens,
- Fig. 2: ein Ablaufdiagramm zum Veranschaulichen des bevorzugten Verfahrens,
- Fig. 3: ein Ablaufschema für Verfahrensschritte in der Sendeund Empfangseinrichtung und
- Fig. 4: ein weiteres Ablaufschema für einen bevorzugten Verfahrensablauf.

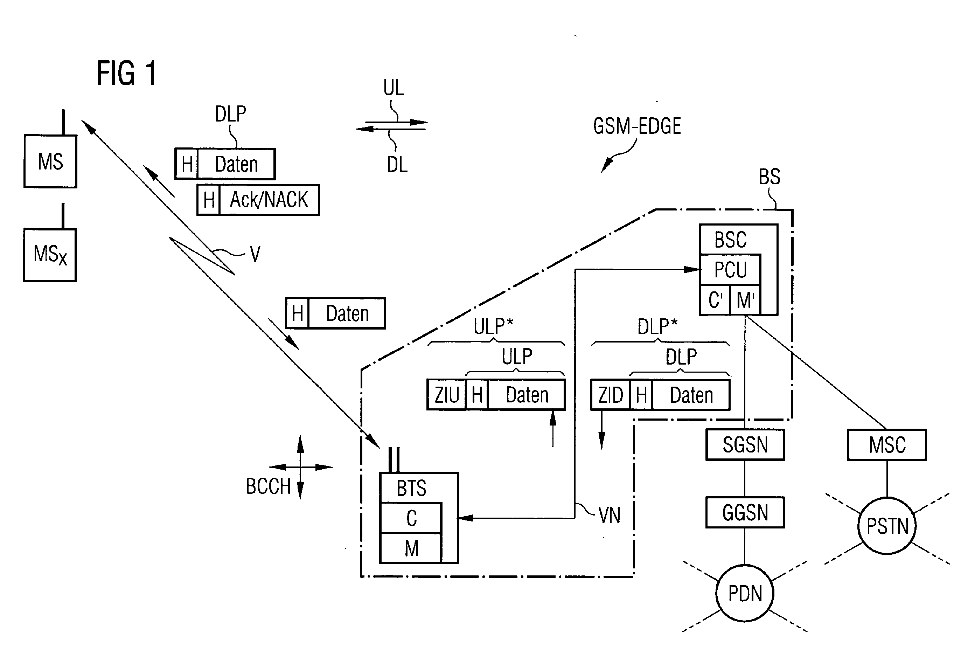

Wie aus Fig. 1 ersichtlich, entspricht das dargestellte Funk-Kommunikationssystem hinsichtlich seiner Struktur einem für sich bekannten GSM-Mobilfunknetz, welches eine oder vorzugsweise eine Vielzahl von Mobilvermittlungseinrichtungen MSC (Mobile Switching Center) für verbindungsorientierte Dienste aufweist, die untereinander vernetzt sind und einen Zugang zu einem Festnetz PSTN ermöglichen. Wie dargestellt, sind solche Mobilvermittlungseinrichtungen MSC mit zumindest einer Basisstations-Steuereinrichtung BSC (Basisstationscontroller) verbunden. Jede derartige Basisstations-Steuereinrichtung BSC ist mit einer Basis-Transceiverstation BTS verbunden, welche im Wesentlichen als Sende- und/oder Empfangseinrichtung BTS dient und nachfolgend ohne Beschränkung als eine solche bezeichnet wird. Die Basisstations-Steuereinrichtung BSC, die u.a. als Ressourcen-Verwaltungseinrichtung BSC eingesetzt wird, und zumindest eine zugeordnete Sende- und/oder Empfangseinrichtung BTS werden zu einem für sich bekannten Basisstations-Subsystemen BS (bzw. BSS) zusammengefasst.

Die Sende- und/oder Empfangseinrichtung BTS kann innerhalb ihrer Funkzelle Z über eine Funk-Schnittstelle V eine Sprachund/oder Datenverbindung zu teilnehmerseitigen Stationen MS, MSx aufbauen. Derartige teilnehmerseitigen Station MS, MSx sind beispielsweise zellulare Mobilfunkgeräte, die ortsfest oder mobil betrieben werden, aber auch Rechnereinrichtungen mit einem Zugang zu Datenbanken oder z.B. dem Internet über diese Funk-Schnittstelle.

Die Sende- und/oder Empfangseinrichtung BTS weist zweckmäßigerweise eine Sende- und/oder Empfangseinrichtungs-Steuereinrichtung C und einen Speicher M zum Durchführen von zum Aufbau der Funk-Schnittstelle erforderlichen Grundfunktionen auf. Zur allgemeinen Signalisierung von Informationen sendet die Sende- und/oder Empfangseinrichtung BTS auch Nachrichten über einen Rundfunkkanal BCCH (Broad Cast Channel) an die in ihrer Funkzelle Z befindlichen teilnehmerseitigen Stationen MS, MSx aus.

Die Basisstations-Steuereinrichtung BSC weist für ihren Betrieb ebenfalls eine Steuereinrichtung C' und einen Speicher M' auf. Die Steuereinrichtung C' kann auch integral mit einer Paketsteuereinheit PCU (Packet Control Unit) ausgebildet sein, welche zur Steuerung des Datenflusses einzelner Datenpakete dient, welche über die Funk-Schnittstelle V und die Verbindung zwischen der Sende- und/oder Empfangseinrichtung BTS und der Basisstations-Steuereinrichtung BSC übertragen werden.

Eine evolutionäre Weiterentwicklung von GSM stellt EDGE dar (Enhanced Data Rates for GSM Evolution). Durch EDGE werden Datenraten von 470 kb/s pro teilnehmerseitiger Station ermöglicht, während GSM/GPRS nur eine maximale Datenübertragungsrat von 182 kb/s bietet. EDGE weist die Komponenten EGPRS (Enhanced General Packet Radio Services) für paketorientierte Dienste und ECSD (Enhanced Circuit Switched Connections) für verbindungsorientierte Dienste auf. Für paketorientierte Dienste ist eine Ankopplung der Basisstations-Steuereinrichtung BSC an ein Paketdatennetz PDN (Packet Data Network) über einen Router SGSN (Serving GPRS Support Node) und ein Gateway GGSN (Gateway GPRS Support Node) vorgesehen.

Die vorstehend beschriebene Struktur ist, wie auch die nachfolgend beschriebenen Bauelemente und Funktionen, prinzipiell auch auf andere Funk-Kommunikationssysteme übertragbar, in denen Datenpakete verfahrensgemäß übertragen werden, insbesondere auch für Teilnehmerzugangsnetze mit drahtlosem Teilnehmeranschluss einsetzbar.

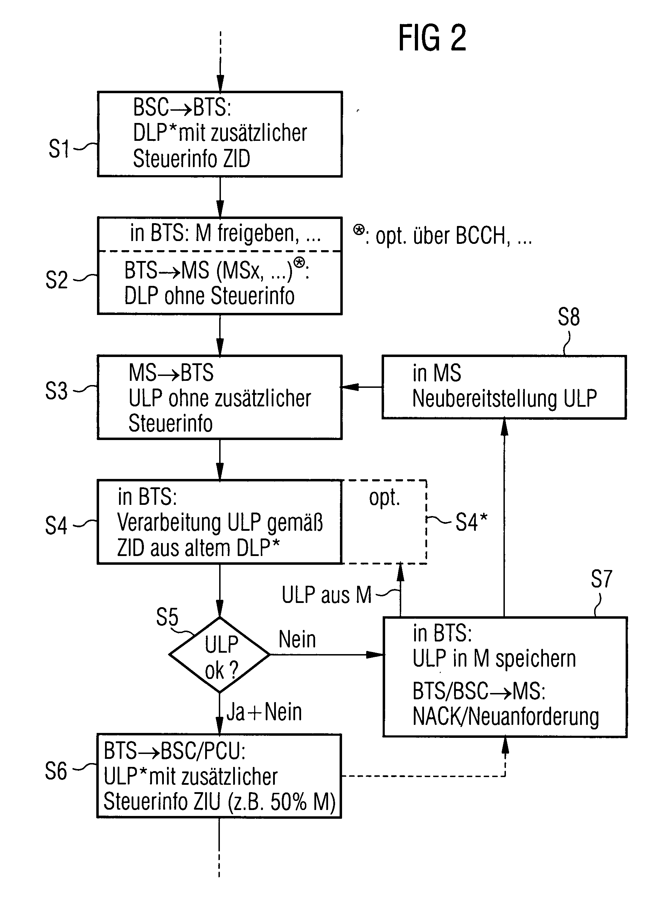

Fig. 2 zeigt einen Ausschnitt aus einem zyklischen Ablauf beim Übertragen von Paketdaten von der Basisstations-Steuereinrichtung BSC über die Sende- und/oder Empfangseinrichtung BTS zu zumindest einer teilnehmerseitigen Station MS in Abwärtsrichtung DL (DownLink) bzw. beim Übertragen von Datenpaketen in umgekehrter Richtung von einer teilnehmerseitigen Station MS zur Basisstations-Steuereinrichtung BSC in Aufwärtsrichtung über eine Aufwärtsverbindung UL (UpLink).

Gemäß der für sich bekannten Datenübertragung bei GSM wird alle 20 ms eine temporäre Datenflussidentifizierungskennung (TFI/Temporary Flow Identifier, USF/Uplink State Flag) im Kopfabschnitt eines jeden Datenblocks übertragen, mit der von der Basisstations-Steuereinrichtung BSC aus über die Sendeund/oder Empfangseinrichtung BTS zu allen teilnehmerseitigen Stationen MS in der Funkzelle eine Anweisung übermittelt wird, welcher Station MS dieser Funkblock in Abwärtsrichtung DL gehört sowie welche Station MS im nächsten Aufwärts-Funkblock senden darf. Zugleich wird der Sende- und/oder Empfangseinrichtung (BTS) in gemäss der Erfindung mitgeschickten Steuerinformtionen damit angekündigt, woher bzw. von welchem MS ein daraufhin eintreffendes Datenpaket stammt und ggf. wie dieses zu decodieren ist. Das Datenpaket wird als Teil eines temporären Blockfluss/Paketdatenfluss (TBF: Temporary Block Flow) gemäß dem vorherigen temporären Flussidentifizierungsmerkmal übertragen. Da bei einer Vielzahl von teilnehmerseitigen Stationen MS, MSx in der Funkzelle Z der Sendeund/oder Empfangseinrichtung BTS und bei einer Vielzahl von verwendbaren Kanälen jeweils für die individuelle Übertragung eines Datenpakets ULP ein eigener Kanal zugewiesen wird, werden die temporären Fluss-Identifizierungsmerkmale bzw. - kennungen (TFI/USF) stets neu verwendet und nicht einer bestimmten teilnehmerseitigen Station in Verbindung mit einem bestimmten Kanal oder einer sonstigen bestimmten Ressource dauerhaft fest zugewiesen. Ferner ist nicht garantiert, dass ein teilnehmerseitige Station MS eine Blockretransmission auf dem selben Kanal wie die Ersttransmission durchführt. Daher müssen die in Abwärtsrichtung gesendeten Steuerinformationen eindeutig sein, damit es in der Sende/Empfangsstation nicht zu Verwechslungen kommen kann.

Um der Sende- und/oder Empfangseinrichtung BTS Zusatzinformationen zu übermitteln ohne dabei aber einen separaten Signalisierungskanal oder dergleichen zu verwenden, wird gemäß einem Schritt S1 von der Basisstations-Steuereinrichtung zu der Sende- und/oder Empfangseinrichtung BTS ein Datenpaket DLP um eine zusätzliche Steuerinformation ZID ergänzt und somit als erweitertes Datenpaket DLP* über die normale Verbindung VN für Datenpakete DLP inbandig übertragen.

Während das übliche Datenpaket DLP in Abwärtsrichtung DL oder auch ein entsprechendes Datenpaket ULP in Aufwärtsrichtung UL aus einem Kopfabschnitt H und einem Datenabschnitt (Daten) besteht, weist das erweiterte Datenpaket DLP* bzw. ULP* entsprechend eine zusätzliche Information ZID bzw. ZIU auf. Diese zusätzliche Information ZID, ZIU kann prinzipiell in sogenannte Spare-Bit eingesetzt werden, also bislang im Kopfabschnitt H nicht verwendeten Bit, kann aber auch in dem Datenabschnitt eingesetzt werden. Bevorzugt wird jedoch die dargestellte Ausführungsform, bei der die zusätzliche Steuerinformation bzw. Statusinformation ZID, ZIU zusätzlich vor den Kopfabschnitt H vorweg gesetzt wird, so dass die tatsächliche Länge bzw. Dauer des Datenpakets DLP* bzw. ULP* auf der Verbindungsstrecke zwischen Basisstations-Steuereinrichtung BSC und Sende- und/oder Empfangseinrichtung BTS verlängert wird. Alternativ kann die zusätzliche Steuerinformation ZID, ZIU auch an anderen Positionen eingesetzt werden, z.B. zwischen Kopfabschnitt H und Datenabschnittdaten oder an das Ende des Datenpakets DLP bzw. ULP, also hinter den Datenabschnitt. Die Steuerinformation in einem getrennten Paket zu verschicken ist prinzipiell ebenfalls möglich, erfordert jedoch zusätzlichen Aufwand.

In üblicher Art und Weise wird hier unter Datenabschnitt ein Datenpaketabschnitt verstanden, welcher abhängig von dem Kommunikationssystem und abhängig von dem Zweck des Datenpaketes nur reine Nutzdaten, nur reine Steuerinformationen oder sowohl Nutzdaten als auch Steuerinformationen enthält. Ebenso kann der Kopfabschnitt H lediglich informative Daten wie z.B. eine Datenpaketnummer, eine Zieladresse und dergleichen enthalten. Der Kopfabschnitt H kann aber auch allgemeine Steuerinformationen enthalten. Ebenso werden unter den zusätzlichen Steuerinformationen ZID, ZIU je nach Bedarf reine Steuerinformationen oder aber auch Nutzdaten verstanden, wobei letztere z.B. zu Codierungszwecken einen Code oder dergleichen ausbilden können.

In einem nachfolgenden Schritt S2 wird in der Sende- und/oder Empfangseinrichtung BTS das von der Basisstations-Steuereinrichtung BSC in Abwärtsrichtung empfangene erweiterte Datenpaket DLP* wieder in das ursprüngliche Datenpaket DLP und die zusätzliche Steuerinformation ZID zerlegt. Das Datenpaket DLP wird über die Funk-Schnittstelle V in Abwärtsrichtung DL an die entsprechende teilnehmerseitigen Station MS gesendet. Die zusätzliche Steuerinformation ZID wird von der Sende- und/oder Empfangseinrichtung BTS für eigene Verwaltungszwecke verwendet. Beispielsweise kann mit Hilfe der zusätzlichen Steuerinformation ZID an die Sende- und/oder Empfangseinrichtung BTS die Anweisung erteilt werden, deren Speicher M oder bestimmte Bereiche des Speichers M freizugeben. Die zusätzliche Steuerinformation ZID ist somit vorzugsweise eine Anweisung an die Steuereinrichtung C der Sende- und/oder Empfangseinrichtung BTS, bestimmte Algorithmen mit bestimmten vorgegebenen Grundparametern ablaufen zu lassen.

Gemäß anderen Ausführungsformen kann die Übertragung des Datenpakets DLP von der Sende- und/oder Empfangseinrichtung BTS an die teilnehmerseitigen Station MS in Abwärtsrichtung DL prinzipiell auch über einen Rundfunkkanal BCCH (Broad Cast Channel) durchgeführt werden, beispielsweise, wenn das Datenpaket reine Anweisungen an eine Vielzahl teilnehmerseitiger Stationen MS, MSx enthält, um diesen zu signalisieren, wer als nächstes auf welche Ressource zugreifen darf, um ein Datenpaket ULP in Aufwärtsrichtung UL über die Funk-Schnittstelle V zu senden.

Im nachfolgenden Schritt S3 wird von der entsprechenden teilnehmerseitigen Station MS über die Funk-Schnittstelle V ein Datenpaket ULP, dass wiederum aus einem Kopfabschnitt H und Datenabschnittsdaten besteht, zu der Sende- und/oder Empfangseinrichtung BTS übertragen. Diese Übertragung erfolgt somit in für sich bekannter Art und Weise ohne eine spezielle zusätzliche Steuerinformation.

Im nachfolgenden Schritt S4 wird in der Sende- und/oder Empfangseinrichtung BTS eine Verarbeitung oder Vorverarbeitung des von der teilnehmerseitigen Station MS empfangenen Datenpakets ULP vorgenommen. Bei dieser Verarbeitung wird insbesondere die zusätzliche Steuerinformation ZID verwendet, die zuvor bei der Ankündigung dieses von der teilnehmerseitigen Station MS empfangenen Datenpakets ULP von der Basisstations-Steuereinrichtung BSC zur Sende- und/oder Empfangseinrichtung BTS übertragen wurde.

Die zusätzliche Steuerinformation ZID kann sich z.B. auf eine spezielle Decodierung des in Aufwärtsrichtung UL empfangenen Datenpakets ULP beziehen, kann sich auf Informationen zu redundanten Datenübertragungen beziehen, kann die Verwaltung des Speichers M der Sende- und/oder Empfangseinrichtung BTS betreffen und kann Richtungsinformationen für die Verarbeitung von Signalen bei Verwendung von strahlformenden Antennen (Beam-Antenne) oder sogar Lokalisierungsinformationen des Teilnehmers in der Zelle umfassen.

In einem nachfolgenden Schritt S5 wird in der Sende- und/oder Empfangseinrichtung BTS überprüft, ob die Verarbeitung gemäß der zusätzlichen Steuerinformation ZID korrekt durchgeführt wurde. Insbesondere in Fällen, bei denen die Verarbeitung auf ein in Aufwärtsrichtung UL empfangenes Datenpaket ULP bezogen ist, wird überprüft, ob dieses Datenpaket ULP korrekt empfangen wurde.

Falls ja, wird in einem folgenden Verfahrensschritt S6 das empfangene und vorverarbeitete oder verarbeitete Datenpaket ULP von der Sende- und/oder Empfangseinrichtung BTS über die Verbindung VN zu der Basisstations-Steuereinrichtung BSC bzw. zu deren Paketsteuereinheit PCU weitergeleitet. Vor dem Weiterleiten wird zweckmäßigerweise eine Erweiterung des Datenpakets ULP um eine zusätzliche Information bzw. Steuerinformation ZIU vorgenommen, so dass letztendlich ein erweitertes Datenpaket ULP* über die Verbindung VN übertragen wird. Diese zusätzliche Steuerinformation dient insbesondere zu informativen Zwecken, um der Basisstations-Steuereinrichtung BSC den Zustand der Sende- und/oder Empfangseinrichtung BTS oder einer in dieser durchgeführten Verarbeitung mitzuteilen.

Beispielsweise kann die in Aufwärtsrichtung UL übertragene zusätzliche Steuerinformation mitteilen, dass in der Sendeund/oder Empfangseinrichtung BTS nur noch 50% des Speichers M frei sind, so dass seitens der Ressourcenverwaltungseinrichtung bzw. Basisstations-Steuereinrichtung BSC zukünftige Freigaben für Datenübertragungen von den teilnehmerseitigen Stationen MS, MSx, so geplant werden können, dass ein Speicherüberlauf in der Sende- und/oder Empfangseinrichtung BTS vermieden werden kann. Bei einer z.B. 100% Speicherauslastung kann dem Kontroller empfohlen werden, schnellstmöglich eine Link Adaptation ausführen, bzw. neuen Verbindungen ein robusteres Kodierschema zuzuweisen.

Andere Informationen in den zusätzlichen Steuerinformationen ZIU in Aufwärtsrichtung UL können aber auch Mitteilungen umfassen, dass ein bestimmter erwarteter Datenblock ULP ausgeblieben ist, fehlerhaft empfangen wurde oder für eine spätere Verarbeitung gemäß z.B. der für sich bekannten inkrementalen Redundanz IR im Speicher M der Sende- und/oder Empfangseinrichtung BTS abgespeichert wurde.

Insbesondere kann die Sende- und/oder Empfangseinrichtung BTS in üblicher Art und Weise Bestätigungsmitteilungen ACK oder Nicht-Bestätigungsmitteilungen NACK an die teilnehmerseitigen Station MS übermitteln, so dass diese eine wiederholte oder mit entsprechend neuer Codierung wiederholte Übertragung eines vorherigen Datenpakets ULP über die Funk-Schnittstelle V in einem weiteren Verfahrensschritt S7 vornimmt, falls im Entscheidungsschritt festgestellt wurde, dass der Datenempfang nicht ausreichend war.

Nach dem Empfang einer Nicht-Bestätigungsmitteilung NACK stellt die teilnehmerseitige Station MS das Datenpaket ULP identisch oder modifiziert neu bereit und überträgt dieses nach der nächsten Ressourcenfreigabe über die Funk-Schnittstelle V zur Sende- und/oder Empfangseinrichtung BTS in dem folgenden Verfahrensschritt S8. Der Prozess wird dann mit dem bereits beschriebenen Ablauf ab dem dritten Schritt S3 fortgesetzt.

Sofern die Sende- und/oder Empfangseinrichtung BTS bereits ein Datenpaket ULP aus einer vorherigen Datenübertragung abgespeichert hatte, welches jedoch als fehlerhaft oder nicht ausreichend umfangreich erkannt wurde, kann in der Sendeund/oder Empfangseinrichtung BTS bei dem Verarbeitungsschritt S4 auch auf den zuvor abgespeicherten Datenblock ULP aus dem Speicher M zugegriffen werden, wie dies als modifizierter vierter Schritt S4* skizziert ist.

Bei den vorstehend beschriebenen Verfahrensschritten können insbesondere zusätzliche Informationen bezüglich einer inkrementalen Redundanz IR oder einer automatischen wiederholten Datenblockübermittlung gemäß dem ARQ-Protokoll (ARQ-Automatic Repeat Request) verwendet werden. Die zugehörigen Funktionen werden dabei innerhalb der Basisstation bzw. des Basisstations-Subsystems BS durch die Paketsteuereinheit PCU in der Basisstations-Steuereinrichtung BSC realisiert. Dadurch, dass erweiterte Datenblöcke ULP* bzw. DLP* auf der Schnittstelle bzw. Verbindung VN verwendet werden, welche bislang nur zur Übertragung der Datenblöcke ULP bzw. DLP verwendet wird, kann eine diesbezügliche zusätzliche und aufwendige Signalisierung vereinfacht werden. Auf diese Art und Weise wird eine inbandige Übertragung vorgenommen, bei der mit vorzugsweise jedem Datenblock DLP* bzw. ULP* eine zusätzliche Information ZIU bzw. ZID gesendet wird.

Die Verwendung der temporären Flussidentifizierungsmerkmale bzw. -kennjungen (TFI) für derartige Zwecke ist nicht möglich, da diese jeweils neu zugeordnet werden (Re-use) und somit den teilnehmerseitigen Stationen MS, MSx nicht eindeutig zugeordnet sind. Besonders kritisch wird deren Anwendbarkeit bei teilnehmerseitigen Stationen, die zugleich über mehrere Ressourcen übertragen können, beispielsweise im sogenannten Multislot-Verfahren. Hingegen ist es möglich, mit der zusätzlichen Steuerinformation ZIU bzw. ZID einem Datenpaket eine für die Funkzelle Z eindeutige Bezeichnung einer bestimmten teilnehmerseitigen Station MS zuzuordnen. Es handelt sich somit um eine zelleindeutige Information. Diese kann beispielsweise aus dem Namen der teilnehmerseitigen Station MS bestehen, welcher innerhalb der Funkzelle Z oder sogar des gesamten Kommunikationssystems eindeutig ist. Sendet die teilnehmerseitige Station MS dann über verschiedene Ressourcen parallel, so können diese verschiedenen Datenpakete ULP in der Sende- und/oder Empfangseinrichtung BTS aufgrund der zuvor in Abwärtsrichtung eindeutig empfangenen zusätzlichen Steuerinformation ZID eindeutig zugeordnet und verarbeitet werden. Um Übertragungskapazität zu sparen, kann beispielsweise die Namensinformation auch kodiert bzw. als Kürzel übertragen werden.

Die Steueranweisungen können vorteilhafterweise auch für die Verwaltung von Ressourcen der Sende- und/oder Empfangseinrichtung BTS selber verwendet werden. Beispielsweise kann die zusätzliche Steuerinformation ZID der Sende- und/oder Empfangseinrichtung BTS die Anweisung erteilen, Speicherraum in dem Speicher M freizugeben, der einer bestimmten teilnehmerseitigen Station MS bzw. deren Datenpaketen ULP zuvor zugewiesen wurde.

Während bei beispielsweise GSM-EDGE bislang die Verwendung des GSM Protokolls LAPD für Signalisierungszwecke zwischen der Basisstations-Steuereinrichtung BSC zur Ressourcenverwaltung und der Sende- und/oder Empfangseinrichtung BTS verwendet werden musste, ist nunmehr eine inbandige Signalisierung verwendbar.

Bei einem besonders bevorzugten Ausführungsbeispiel besteht der Grundgedanke somit darin, von den Aufgaben, die für beispielsweise inkrementale Redundanz (IR) in Aufwärtsverbindungen erforderlich sind, so viele wie möglich, innerhalb der Sende- und/oder Empfangseinrichtung BTS autonom/unabhängig auszuführen. Die Sende- und/oder Empfangseinrichtung BTS ist eine vollständig autonome und vorzugsweise abgesetzte Einrichtung, wobei sie z.B. für das Löschen ihres eigenen Speichers M usw. verantwortlich wird. Die Sende- und/oder Empfangseinrichtung BTS wird von der Paketsteuereinheit PCU in der Basisstations-Steuereinrichtung BSC auf Basis von inbandig über die standardmäßige Verbindung VN zur Datenpaketübertragung übertragenen Übertragungsrahmen alle 20 ms informiert, ob der in der Sende- und/oder Empfangseinrichtung BTS als nächstes in einer Aufwärtsverbindung UL von einer teilnehmerseitigen Station MS empfangene Datenblock ULP mit Hilfe der Algorithmen und Einrichtungen zur Durchführung der inkrementalen Redundanz gehandhabt bzw. vorverarbeitet werden muss oder nicht.

Die Basisstations-Steuereinrichtung BSC bietet dazu zusätzlich zu der regulären inbandigen Übertragung eines Datenblocks DLP eine Identifizierungsinformation, welche als zusätzliche Steuerinformation ZID spezifisch für eine entsprechende teilnehmerseitigen Station MS ist, wobei diese Information ZID der Sende- und/oder Empfangseinrichtung BTS hilft, Aufwärtsverbindungs-Funkdatenblöcke ULP der teilnehmerseitigen Station MS in der Funkzelle Z zuzuordnen und wobei diese Information ZID auch für die Speicherorganisation in der Sende- und/oder Empfangseinrichtung BTS verwendet werden kann.

Die Sende- und/oder Empfangseinrichtung BTS selber sendet der Paketsteuereinheit PCU nützliche Informationen und Fehlermeldungen inbandig über die für Paketübertragung bereitstehende Verbindung VN, und zwar vorzugsweise gemäß den derzeit üblichen Vorgaben auf Basis von Aufwärtsverbindungs-Paketsteuereinheit-Datenübertragungsblöcken (UL PCU frames) alle 20 ms. Vorteilhafterweise kann dadurch die derzeit übliche LAPD-Signalisierung vollständig umgangen werden.

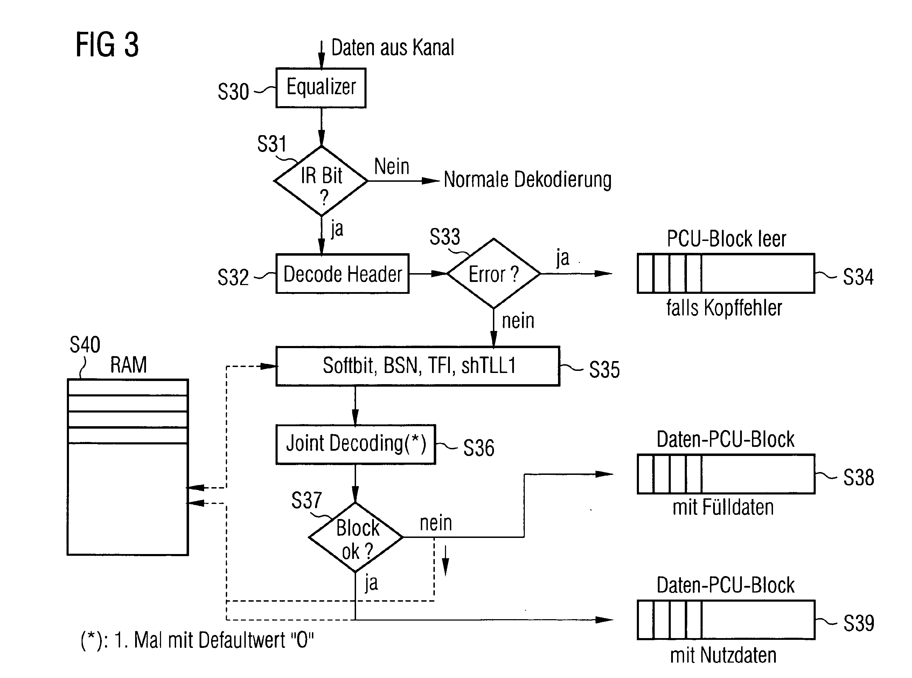

Beispielhafte Verfahrensablaufschritte für eine Steuerung inkrementaler Redundanz mit Hilfe dieser Verfahrensweise sind aus Fig. 3 ersichtlich, wobei die dargestellte Reihenfolge nicht zwingend mit einem tatsächlichen Ablauf übereinstimmen muss. In einem Schritt S30 treffen Daten aus einem Kanal, insbesondere über die Funk-Schnittstelle V, in einem Equalizer der Sende- und/oder Empfangseinrichtung BTS ein. Anhand der in Abwärtsrichtung DL 20 ms zuvor gesendeten zusätzlichen Steuerinformation ZID, aus der die Sende- und/oder Empfangseinrichtung BTS entnehmen kann, welche der teilnehmerseitigen Stationen MS, MSx senden durfte, erlangt die Sendeund/oder Empfangseinrichtung BTS die Information, woher der Datenblock ULP stammt, der im Equalizer eingetroffen ist.

Außerdem wird der zusätzlichen Steuerinformation ZID entnommen, ob ein Bit für die Betriebsart der inkrementalen Redundanz IR gesetzt ist oder nicht. Falls nein, wird eine normale Decodierung des empfangenen Datenpakets ULP durchgeführt, wie dies z.B. bei GPRS sowie bei Realtime-Diensten ohne ARQ-Protokoll (automatic repeat request) üblich ist. Falls ja, wird der Kopfabschnitt entsprechend decodiert S31.

In einem weiteren Abfrageschritt S32 wird überprüft, ob die Daten des Kopfabschnitts fehlerhaft sind oder nicht. Falls ja, dass heißt falls ein Fehler in den eigentlichen Nutzdaten des Kopfabschnitts vorliegt, wird ein leerer PCU-Datenübertragungsblock über die Verbindung VN zu der Paketsteuereinheit PCU in der Basisstations-Steuereinrichtung BSC gesendet S34. Diese veranlasst dann eine erneute Übertragung durch die teilnehmerseitige Station MS.

Falls nein, dass heißt falls die Nutzdaten des Kopfabschnitts fehlerfrei decodiert wurden, dann werden die decodierten Daten zur weiteren Verarbeitung bereitgestellt S35. Als decodierte Daten stehen bei den für sich bekannten Systemen wie GSM/GPRS/EDGE Softbit, dass heißt noch codierte Nutzdaten mit tendenzieller 0/1 Aussage, eine Blocksequenznummer BSN, die temporäre Flussidentifizierungskennung TFI und die zusätzliche Steuerinformation ZID zur Verarbeitung bereit.

Bei der dargestellten Ausführungsform soll die zusätzliche Steuerinformation ZID als temporäre logische Verbindungs-Identifizierungskennung shTLLI (shortened Temporary Logical Link IDentifier) in einer verkürzten bzw. kodierten Form bereitstehen. Während eine übliche temporäre logische Verbindungs-Identifizierungskennung TLLI 32 Bit Daten aufweist, wird für den vorliegenden Zweck eine Verkürzung auf zum Beispiel 10 Bit vorgenommen. Diese verkürzte temporäre logische Verbindungs-Identifizierungskennung reicht aus, um eine eindeutige Zuordnung des Datenblocks zu einer bestimmten teilnehmerseitigen Station MS vorzunehmen und zusätzlich auch das Bit zur Kennzeichnung des Status hinsichtlich inkrementaler Redundanz IR gemäß Schritt S31 aufzunehmen. Ferner wird noch bekannt gemacht, ob die verkürzte temporäre logische Verbindungs-Identifizierungskennung neu belegt wurde bzw. bereits bekannt ist. Bei neuer Belegung wird der Empfänger seinen Speicherbereich für diese Kennung auf jeden Fall löschen, bei bekannter Kennung können empfangene Blöcke im entsprechenden Speicherbereich abgelegt werden. Die derart verfügbar gemachten Daten werden einer gemeinsamen Decodierung zugeführt S36, sofern bereits zuvor ein entsprechender Datenblock empfangen wurde. Im Fall der erstmaligen Decodierung des Datenblocks wird für die gemeinsame Decodierung (Joint Decoding) der Defaultwert auf "0" gesetzt.

Nachfolgend wird in einem Schritt S37 überprüft, ob der Datenblock ordnungsgemäß decodiert wurde oder nicht. Falls nicht, wird ein Daten-PCU-Datenübertragungsblock mit einem vorgegebenen Datenmuster gefüllt, z.B. durch Einsetzen der verfügbaren Kopfabschnittsinformationen in den Kopfabschnitt und leer belassen der Datenbit. Dieser decodierte Datenblock wird dann über die Verbindung VN der Paketsteuereinheit PCU in der Basisstations-Steuereinrichtung BSC zugeführt. Außerdem wird dieser Datenblock in dem Speichers M bzw. RAM der Sende- und/oder Empfangseinrichtung BTS gespeichert.

Falls die gemeinsame Decodierung erfolgreich war, dass heißt alle Daten ermittelt und bereitgestellt wurden, wird ein Daten-PCU-Übertragungsblock mit Kopfabschnittsdaten und zusätzlich Nutzlast bzw. Nutzdaten bereitgestellt und zur Paketsteuereinheit PCU der Basisstations-Steuereinheit BSC übertragen S39.

Außerdem wird ein derart erstellter Datenblock optional dem Speicher M bzw. RAM zugeführt. Aus dem Speicher RAM werden bei Bedarf Datensätze bzw. Datenblöcke, die zuvor abgespeichert wurden und zu dem gleichen ursprünglichen Datenblock gehören, abgerufen, um diese mit neu empfangenen Daten in der gemeinsamen Decodierung gemeinsam zu verarbeiten.

Ein Ablauf der Verfahrensweise wird nachfolgend unter Bezug auf einzelne beispielhafte Bit der zusätzlichen Steuerinformation ZID bzw. ZIU beschrieben.

Dabei sind die einzelnen Bit und zugeordneten Bedeutungen Tabelle 1 entnehmbar. Die erste Spalte von Tabelle 1 gibt BitPositionen innerhalb des erweiterten Kopfabschnitts an, wobei die nicht aufgeführten Bit C1-C24 der standardmäßigen Belegung im Kopfabschnitt H entsprechen. Die Bit C25-C63 sind bei dem dargestellten Ausführungsbeispiel zusätzliche Steuerinformationen ZID bzw. ZIU.

Die nachfolgenden Bit D1-D216 sind Bit für Nutzlast bzw. Nutzdaten. In diesen Bit D1-D216 sind bei Übertragungen in Aufwärtsrichtung UL Nutzlast oder Fülldaten oder FN/TA Werte (Leer-Übertragungsblöcke) (FN: Frame Number/Übertragungsblock-Nummer; TA: Timing Advance)eingesetzt. In Abwärtsrichtung werden in diesen Bit D1-D216 des Datenabschnitts der Datenpakete ULP bzw. DLP Nutzlast oder Fülldaten oder Übertragungsblock-Nummer, d.h. Leer-Datenübertragungsblöcke eingesetzt.

In der zweiten Spalte von Tabelle 1 sind somit Bedeutungszuordnungen zu den Bitbelegungen bei Übertragungen in Aufwärtsrichtung UL angegeben während in der dritten Spalte von Tabelle 1 Bedeutungen der einzelnen Bit bei Übertragungen in Abwärtsrichtung DL angegeben sind.

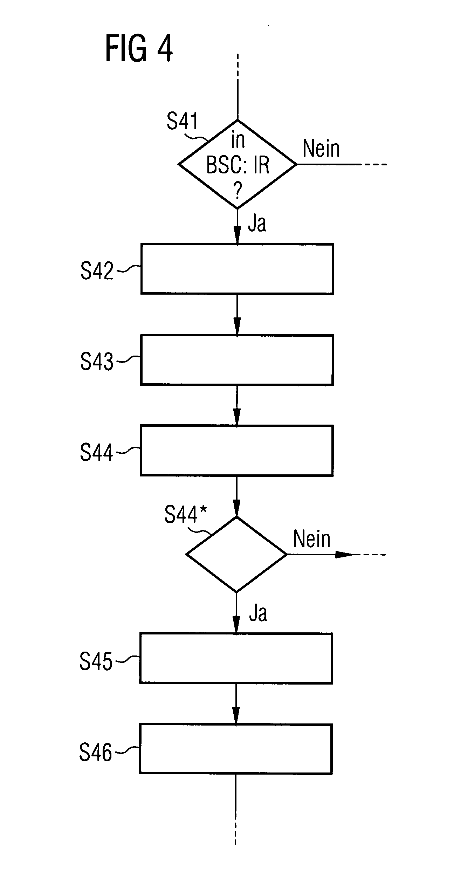

Wie dies neben der Tabelleninformation auch aus Fig. 4 ersichtlich ist, entscheidet die Basisstations-Steuereinrichtung BSC bzw. die darin befindliche Paket-Steuereinheit PCU in einem ersten Schritt S41, ob für ein bestimmtes in Aufwärtsrichtung UL über die Funk-Schnittstelle V übertragenes Datenpaket ULP die inkrementale Redundanz IR verwendet werden soll oder nicht. Grundlage für eine solche Entscheidung kann ein entsprechender Schaltzustand in einem Betriebs- und Wartungszentrum (O&M) sein, wobei durch den Schaltzustand zellenweise die "Inkrementelle Redundanz für die Aufwärtsverbindung" freigeben oder abgeschaltet wird. Diese Information muss nur der Basisstations-Steuereinrichtung BSC bekannt sein, nicht aber der Sendeund/oder Empfangseinrichtung BTS. Die Sende- und/oder Empfangseinrichtung BTS muss keinen Zustand mit dem Informationsgehalt "Inkrementelle Redundanz für die Aufwärtsverbindung" freigegeben oder abgeschaltet "halten". Sinnvoll ist der Einsatz einer solchen Schaltfunktion, die der Basisstations-Steuereinrichtung BSC bekannt ist, vor allem für Übertragungen in der RLC-Bestätigungs-Betriebsart bei EGPRS (RLC: Radio Link Control). In dieser Betriebsart wird eine Bestätigungsmitteilung ACK oder eine Nicht-Bestätigungsmitteilung NACK nach der Untersuchung abgesendet, ob ein Datenblock ULP in der Sende- und/oder Empfangseinrichtung BTS mit ausreichender Qualität empfangen wurde. Für Zwecke der nachfolgenden Erörterung soll davon ausgegangen werden, dass die "Inkrementelle Redundanz IR für die Aufwärtsverbindung" aktiviert ist.

Dies vorausgesetzt, unterstützt bei einem folgenden Schritt S42 die Paketsteuereinheit PCU in der Basisstations-Steuereinrichtung BSC innerhalb eines jeden Trägers einen einmalig vergebenen Wert der temporären logischen Verbindungs-Identifizierungskennung shTLLI für eine teilnehmerseitige USF-Station MS (USF: Uplink State Flag) innerhalb einer Funkzelle Z, welche sich in der Übertragungsbetriebsart gemäß GPRS/EGPRS befindet. Die teilnehmerseitige USF-Station ist zweckmäßigerweise eine teilnehmerseitige Station MS, welche einen temporären Aufwärtsverbindungs-Blockfluss (UL TBF) unterstützt. Die abgekürzte temporäre Verbindungs-Identifizierungskennung shTLLI wird aus der temporären logische Verbindungs-Identifizierungskennung TLLI der teilnehmerseitigen Station MS, aus deren IMSI (International Mobile Subscriber Identity) oder einer anderen eindeutigen Identifizierungskennung der teilnehmerseitigen Station MS abgeleitet und in jedem verketteten PCU-Datenübertragungsblock in Abwärtsrichtung DL übermittelt. Zusammen mit der abgekürzten temporären logische Verbindungs-Identifizierungskennung shTLLI wird in dem verketteten PCU-Datenübertragungsblock in Abwärtsrichtung DL auf Funkblockbasis ein Bit gesetzt, wobei das Bit angibt, ob für den nächsten Datenübertragungsblock bzw. das nächste Datenpaket ULP in Aufwärtsrichtung inkrementelle Redundanz IR durch die Sende- und/oder Empfangseinrichtung BTS angewendet werden soll oder nicht. Im Fall von Übertragungen von Datenpaketen DLP in Abwärtsrichtung DL kann diese abgekürzte temporäre logische Verbindungs-Identifizierungskennung shTLLI für inkrementelle Redundanz IR ignoriert werden, wobei eine Bedeutung jedoch beispielsweise für die Steuerung geschalteter Strahlcharakteristik, bzw. zum Scannen von Teilnehmer-Lokalisierungsdaten von Bedeutung sein kann.

Die entsprechende Signalisierung in Abwärtsrichtung DL der verkürzten temporären logische Verbindungs-Identifizierungskennung shTLLI für die Übertragungen der teilnehmerseitigen Station MS in Aufwärtsrichtung UL erfolgt über verkettete PCU-Datenübertragungsblöcke und wird, wie auch die Signalisierung des Bit für die inkrementelle Redundanz für jeden Aufwärtsverbindungs-Funkblock bzw. jedes Aufwärtsverbidungs-Datenpaket ULP der teilnehmerseitigen Station MS für alle Zeitschlitz-Nummern (TN: Timeslots / Timeslot Number) einer Mehrschlitz-Belegung der teilnehmerseitigen Station MS durchgeführt S43.

Diese Vorgehensweise wird selbst dann gewählt, wenn eine erweiterte dynamische Belegung (enhanced dynamic allocation) verwendet wird, was einem Überbestimmen (over ruling) der tatsächlichen Aufwärtsverbindungs-Zustandsmerker (USF), welcher nur bei der niedrigsten Zeitschlitznummer gesetzt ist, bedeutet. Außerdem wird dies bei einer Aufwärtsverbindungs-Granularität < 1 vorgenommen, was einem Überregeln der tatsächlichen Aufwärtsverbindungs-Zustandsmerker (USF) entspricht, welche nur für den ersten von vier Aufwärtsverbindungs-Funkübertragungsblöcken gesetzt sind.

Das im zweiten Schritt S42 genannte Bit zur Kennzeichnung, ob der nächste Aufwärtsverbindungs-Datenübertragungsblock mit inkrementeller Redundanz behandelt wird, wird pro Funkübertragungsblock bzw. Datenpaket ULP, DLP gesetzt. Dies macht natürlich insbesondere bei einer temporären Blockfluss-Übertragung (TBF: Temporary Block Flow) in einer RCL-Bestätigungs-Betriebsart Sinn. Diese Information ist jedoch der Basisstations-Steuereinrichtung BSC bekannt, so dass die Basisstations-Steuereinrichtung BSC für temporäre Nicht-Bestätigungs-(NACK)-Blockflüsse (TBF) lediglich das Bit für inkrementelle Redundanz auf "0" setzen muss. Für Zwecke der nachfolgenden Erörterung soll dieses Bit gesetzt sein S44*.

Wie dies neben Fig. 3 auch Schritt S45 aus Fig. 4 entnehmbar ist, werden die Softbit eines Aufwärtsverbindungs-Funkdatenblocks bzw. Aufwärtsverbindungs-Datenpaket ULP nach dem Verlassen des Equalizers S30, jedoch vor der endgültigen Decodierung S36 innerhalb der Sende- und/oder Empfangseinrichtung BTS analysiert. Eine übliche Analyse innerhalb der Paketsteuereinheit PCU in der Basisstations-Steuereinrichtung BSC würde hingegen die Datenmenge, die über die Verbindung VN, insbesondere eine A_{bis}-Schnittstelle, transportiert wird, über akzeptierbare Maße hinaus erhöhen. Falls das Bit für die inkrementale Redundanz 20 ms zuvor gesetzt war, sucht die Sende- und/oder Empfangseinrichtung BTS nach alten gespeicherten Softwerten des gleichen RLC-Blocks bzw. Aufwärtsverbindungs-Datenpakets ULP mit Hilfe der gekürzten temporären logische Verbindungs-Identifizierungskennung shTLLI, der temporären Fluss-Identifizierungskennung für die Aufwärtsverbindung (UL-TFI) und der Blocksequenznummer (BSN) in ihrem Speicher M bzw. RAM und führt mit dem hereingekommenen Aufwärtsverbindungs-Datenblock ULP eine gemeinsame Decodierung durch S36, falls solche ältere Datenblöcke abgespeichert waren. In Fällen, in denen der Funkübertragungsblock zwei oder mehr verschiedene Aufwärtsverbindungs-Datenpakete ULP mit verschiedenen Blocksequenznummern trägt, werden diese separat gehandhabt.

Um diese Decodierung durchzuführen, werden bei dem dargestellten Verfahrensablauf sowohl die temporäre Fluss-Identifizierungskennung TFI als auch die Blocksequenznummer benötigt, welche aus dem Kopfabschnitt H des Aufwärtsverbindungs-Datenpakets ULP fehlerfrei bestimmt werden müssen.

Falls die Decodierung erfolgreich war, werden die Daten des Funk-Übertragungsblockes bzw. des Aufwärtsverbindungs-Datenpakets ULP über einen regulären verketteten Daten-PCU-Übertragungsblock zu der Paketsteuereinheit PCU gesendet. Außerdem werden alle gespeicherten Softwerte bzw. Softbit des entsprechenden Funk-Übertragungsblockes bzw. Aufwärtsverbindungs-Datenpakets ULP in dem Speicher M der Sende- und/oder Empfangseinrichtung BTS gelöscht. Falls die Decodierung nicht erfolgreich war, werden die Werte des hereinkommenden Funk-Übertragungsblockes bzw. Aufwärtsverbindungs-Datenpaketes ULP zweckmäßigerweise in dem Speicher M der Sende- und/oder Empfangseinrichtung BTS in einer Tabelle gespeichert, die mit der abgekürzten temporären logische Verbindungs-Identifizierungskennung shTLLI der teilnehmerseitigen Station MS verknüpft wird, wobei ein temporäres Abspeichern mit außerdem Blocksequenznummer und temporärer Flussidentifizierungskennung TFI vorgenommen wird. Die Sende- und/oder Empfangseinrichtung BTS sendet dann an die Paketsteuereinheit PCU einen leeren verketteten PCU-Datenübertragungsblock in dem Fall eines Kopfabschnittsfehlers oder einen verketteten Daten-PCU-Übertragungsblock mit einer aufgefüllten Struktur für den Fall, dass die Daten des Kopfabschnitts fehlerfrei sind aber ein teilweiser oder vollständiger Fehler in den Nutzdaten vorliegt, wie dies auch den Bit C25, C26 mit der Belegung "00" zu entnehmen ist. Für den Fall eines nicht vollständigen Fehlers bei den Nutzdaten kann dies mit diesen Bit auch entsprechend signalisiert werden, wobei z.B. bei der Übertragung von zwei verschiedenen Aufwärtsverbindungs-Datenpaketen ULP in einem Funkblock bei einem korrekt decodierten Block und einem fehlerhaft decodierten Block eine Signalisierung durch die Bit C25, C26 mit "10" bzw. "01" vorgenommen wird.

Die Paketsteuereinheit PCU weist die teilnehmerseitige Station MS dann an, fehlerhafte oder ausgefallene Aufwärtsverbindungs-Datenpakete ULP nach der nächsten Bestätigungsperiode erneut zu senden, wobei dies in für sich bekannter Art und Weise durchgeführt wird. Praktisch wird das Bit für inkrementale Redundanz im nächsten Aufwärtsverbindungs-Datenpaket ULP für alle Blöcke bzw. Datenpakete ULP eines temporären Aufwärtsverbindungs-Blockflusses (UL-TBF) in der RLC-Bestätigungsbetriebsart gesetzt, falls inkrementale Redundanz in der Funkzelle Z freigegeben ist. Die teilnehmerseitige Station MS wird dann den RCL-Block bzw. das Aufwärtsverbindungs-Datenpaket ULP unter Verwendung der gleichen Modulations- und Codier-Schemata (MCS: Modulation & Coding Scheme) jedoch mit zweckmäßigerweise einem dazu verschiedenen Punktierungsschema erneut übertragen. Falls die teilnehmerseitige Station MS ein anderes Modulations- und Codier-Schemata verwenden soll, wird dies entsprechend durch die Paketsteuereinheit PCU mit Hilfe der Verbindungsanpassung (Link Adaption) entsprechend angewiesen.

Falls die Decodierung S36 erfolgreich ist, wird der Block aus Daten über verkettete PCU-Datenübertragungsblöcke zu der Paketsteuereinheit PCU gesendet und die zuvor gespeicherten Softversionen dieses Blockes werden aus dem Speicher M der Sende- und/oder Empfangseinrichtung BTS entfernt.

Falls die Decodierung in der Sende- und/oder Empfangseinrichtung BTS nicht erfolgreich war, wird auch der momentane RCL-Block bzw. das zuletzt empfangene Aufwärtsverbindungs-Datenpaket ULP in dem Speicher M der Sende- und/oder Empfangseinrichtung BTS gespeichert und zusammen mit der Signalisierung eines Fehlers zu der Paketsteuereinheit PCU gesendet, welche die teilnehmerseitige Station MS wiederum anweist, eine erneute Übertragung vorzunehmen. Die Signalisierung zur Paketsteuereinheit PCU kann beispielsweise durch entsprechendes Setzen der Bit C25, C 26 = "00" oder "01" oder "10" erfolgen. Mitgeteilt werden kann damit ein Kopfabschnittsfehler, ein leerer Datenübertragungsblock bzw. Nutzlastfehler oder ein Datenübertragungsblock mit gesetztem Nutzlastfehler-Bit.

Vorteilhafterweise ist das Verfahren auch bei Mehrschlitz-Belegungen anwendbar, bei den die erneute Übertragung eines Funkblocks bzw. Aufwärtsverbindungs-Datenpakets ULP im Allgemeinen nicht auf dem gleichen Paketdatenkanal (PDCH) erfolgt wie bei der anfänglichen Übertragung. Für solche Fälle wird in der abgekürzten temporären logischen Verbindungs-Identifizierungskennung shTLLI für eine teilnehmerseitige Station MS eine senderweite Definierung mit einer eindeutigen Kennung vorgenommen. Ferner sollte die Nummer des Paketdatenkanals nicht ein vorgegebener Index zum Speichern der Softwerte des RLC-Blocks bzw. Aufwärtsverbindungs-Datenpakets ULP bei einer EDEG-CU (CU: Carrier Unit/Trägereinheit, Transceiver) sein.

Dies kann bis zu einem bestimmten Limit durchgeführt werden, wobei die Paketsteuereinheit bei einem ausbleibenden Erfolg ihre Strategie ändern sollte, also z.B. Änderungen hinsichtlich der Leistungssteuerung und/oder der Verbindungsanpassung vornehmen sollte.

Die Sende- und/oder Empfangseinrichtung BTS informiert die Paketsteuereinheit PCU mit jedem PCU-Datenübertragungsblock auch über den Füllzustand ihres Speichers M. Die Paketsteuereinheit PCU entscheidet dann, wann die Betriebsart mit inkrementaler Redundanz abzuschalten ist, um ein Überlaufen des Speichers M in der Sende- und/oder Empfangseinrichtung BTS zu verhindern. Ob in dem Speicher M der Sende- und/oder Empfangseinrichtung BTS Softwerte eines Datenblocks gespeichert oder gelöscht werden sollen, wird durch die entsprechenden Bit mit Hilfe von inbandiger Signalisierung in den verketteten Aufwärtsverbindungs-PCU-Datenübertragungsblöcken signalisiert.

Gemäß einem sechsten Schritt S46 wendet die Sende- und/oder Empfangseinrichtung BTS unabhängig eine Regenerierungsstrategie (recovery strategy) für ihren Speicher M an, wobei sie abschließend decodierte Blöcke aus dem Speicher M entfernt, wie dies vorstehend beschrieben ist, aber auch Blöcke entfernen kann, deren maximale Speicherdauer abgelaufen ist. Für diesen Zweck sollte auch für jede gekürzte temporäre logische Verbindungs-Identifizierungskennung shTLLI die Übertragungsrahmennummer des letzten empfangenen Blocks gespeichert werden. Falls die maximale Speicherdauer gemäß einem verwendeten Zeitgeber verstrichen ist, werden alle Softwerte von allen Blöcken, die in dem Speicher M für diese gekürzte temporäre logische Verbindungs-Identifizierungskennung bzw. die TFI gespeichert sind, automatisch entfernt.

Gemäß einem siebten Schritt S47 wird die gekürzte temporäre logische Verbindungs-Identifizierungskennung shTLLI auch nach einer gewissen Zeitdauer ungültig und kann daher später für eine andere teilnehmerseitige Station MSx neu verwendet werden (reused). Der in Abwärtsrichtung übertragene PCU-Datenübertragungsrahmen zeigt durch zwei zusätzliche Indikatorbit an, ob die gekürzte temporäre logische Verbindungs-Identifizierungskennung shTLLI neu, noch gültig oder neu verwendet wurde. Für neu verwendete oder neue gekürzte temporäre logische Verbindungs-Identifizierungskennungen shTLLI sollte die Sende- und/oder Empfangseinrichtung BTS alle alten gespeicherten Datenwerte löschen, die auf diese gekürzte temporäre logische Verbindungs-Identifizierungskennung bezogen sind.

Gemäß einem Schritt S48 gibt es auch 2 Bit, die in den PCU-Datenübertragungsblock in Aufwärtsrichtung UL bzw. dem Aufwärtsverbindungs-Datenpaket ULP in der zusätzlichen Steuerinformation ZIU verfügbar sind, um der Paketsteuereinheit PCU einige denkbare Fehler bei der Durchführung der inkrementalen Redundanz in der Sende- und/oder Empfangseinrichtung BTS zu signalisieren. Diese Information kann durch die Paketsteuereinheit PCU auch verwendet werden, um die inkrementale Redundanz für den temporären Blockfluss (TBF) zu stoppen oder eine Verbindungsanpassung (LA) durchzuführen.

Gemäß einem neunten Schritt S49 sollte die Sende- und/oder Empfangseinrichtung BTS die Softwerte eines RLC-Blocks bzw. Datenpakets ULP, DLP in dem Speicher M bzw. einer Hash-Tabelle speichern, wobei als Index die gekürzte temporäre logische Verbindungs-Identifizierungskennung shTLLI, die temporäre Fluss-Identifizierungskennung (TFI) und die Blocksequenznummer verwendet werden. Anzumerken ist, dass für diese Zwecke die temporäre Fluss-Identifizierungskennung wichtig ist, wenn in Zukunft mit der Einführung von GERAN einer teilnehmerseitigen Station MS ermöglicht wird, verschiedene parallele temporäre Blockflüsse (TBF) mit verschiedenen temporären Fluss-Identifizierungskennungn (TFI) zu verwenden.

**Tabelle 1:**

| Bit-Belegung im Kopfabschnitt bzw. der zusätzlichen Steuerinformationen ZID, ZIU | | |
|---|---|---|
| **Bit-Belegung** | **UL bzw. ZIU (BTS zur BSC)** | **DL bzw. ZID (BSC zur BTS)** |
| C25, C26 | 00: EDGE RLC/MAC-Kopfabschnitt o.k., jedoch vollständiger Nutzlastfehler | |
| | | |
| | 01: MCS7-MCS9, erster RLC-Block defekt, zweiter ist o.k. | |
| | 10: MCS7-MCS9, zweiter RLC-Block defekt, erster ist o.k. 11: EDGE RLC/MAC-Kopfabschnitt o.k. und Nutzlast vollständig o.k. GPRS immer "11" Anmerkung: im Fall von EGPRS-Kopfabschnittsfehler oder GPRS-Nutzlastfehler wird leerer Übertragungsrahmen übermittelt | |
| | **inkrementale Redundanz (UL-Richtung)** | |
| C27 | IR-RAM, Soft-Entscheidungen, Speicherung von nicht erfolgreich decodierten Blöcken (einem oder zweien) des momentanen Funk-Übertragungsblocks (0:keine Speicherung, 1:Softwerte speichern) | C47: Inkrementale Redundanz für Aufwärtsverbindung wird für den nächsten UL- Funkübertragungsblock aktiviert (nur für EGPRS-Datenblöcke gültig). Gibt der Paketsteuereinheit die Möglichkeit, der BTS zu berichten, ob IR aktiviert ist (C47=1 für UL) oder nicht (C47=0), z.B. für nicht bestätigten temporären Blockfluss. Im Fall eines bestätigten |
| | | TBF mit aktivierter IR setzt die PCU dieses Bit für alle UL-Funkblöcke. |
| | | Diese IR-Steuerung ist eng mit shTLLI Konzept gekoppelt. |
| C28, C29 | BTS-Speicherzustand für IR: 00: Speicher voll oder aufgrund von HW nicht verfügbar; IR nicht weiter verfügbar xx: n × 256 kByte Speicher frei 11: ein MByte oder mehr RAM frei | |
| C30, C31 | IR-RAM für diese RLC-Blöcke zu löschen 00: RAM nicht gelöscht 01: RAM gelöscht für den zweiten RLC-Block 10: RAM gelöscht für nur ersten RLC-Block 11: RAM für alle RLC-Blöcke des momentanen Funkblocks gelöscht | |
| C32, C33 | IR-RAM Information Anzahl der Softblock-Kopien der RLC-Blöcke des momentanen Funkblocks ist nun 00: unter 3 Kopien für einen oder beide RLC-Blöcke 01: größer oder gleich 3 für zumindest einen Block | |
| | 10: größer oder gleich 5 für zumindest einen Block 11: überschreitet 7 für zumindest einen Block | |
| C34, C35 | IR-RAM Fehlerhandhabung 00: kein Fehler 01: Empfang von zumindest einem RLC-Block mit falschen Punktierungsschema 10: fehlende Übereinstimmung zwischen Neuübertragungs-Bit (RSB: Resent Bit) und IR-Speicher 11: Gemeinsame Decodierung fehlerhaft Bit C34, C35 werden zum Erhöhen der Priorität genutzt | |
| C36, C58 | **Signalpegel und Signal- qualität** | |
| | **Smart-Antennen-Steuerung** | **Smart-Antennen-Steuerung, auch für IR und BTS-Messungs-Vorverarbeitung verwendbar** |
| C59 | Smart-Antenne/geschaltete Richtstrahl-Empfangsrichtung C59=1: keine Richtung gemessen, Rundfunkantenne mit vollem Sektor anzunehmen, C58-C61 sind ungültig C59=0 Richtungscharakteristik liegt vor 0000-1111: 16 Antennen-Subsektoren für herein- | C48-C49: 00: empfangende MS: alte TLLI/Teilnehmer-ID; gleiche MS wie zuvor aber neuer DL-TBF mit neuer TFI, neue Mehrschlitz-Belegung etc., folglich muss BTS-Tabelle aktualisiert werden 01: empf. MS: alte TLLI/Teilnehmer-ID; gleiche MS wie zuvor und noch |
| C60-C63 | kommende Funkblöcke werden im Uhrzeigersinn gezählt | der gleiche TBF 10: empf. MS neue TLLI/Teilnehmer-ID, lösche und aktualisiere BTS-Tabellen, neue Berechnungen für gerichteten Strahl, lösche IRSpeicher für alten TBF 11: frei, für zukünftige Verwendung, ignoriere shTLLI |
| | | C50-C59: empf. MS: gekürzte TLLI/Teilnehmer-ID C60-C61: 00: USF-MS: alte TLLI/Teilnehmer-ID; gleiche MS wie zuvor aber neuer DL-TBF mit neuer TFI, neue Mehrschlitz-Belegung etc., BTS-Tabellen müssen folglich aktualisiert werden, IR-Speicher ist für alten TBF zu löschen 01: USF-MS: alte TLLI/Teilnehmer-ID; gleiche MS wie zuvor und noch der gleiche TBF 10: USF-MS: neue TLLI/Teilnehmer-ID; lösche und aktualisiere BTS-Tabellen, neue Berechnungen für gerichteten Strahl, lösche IR-Speicher für alten TBF |
| | | 11: unbenutzt für spätere Verwendung, ignoriere shTLLI C62-C71: USF-MS, shTLLI/Teilnehmer-ID C62=MSB |
| | C64-C71: unbenutzt | Nicht unbenutzt |
| | **Nutzlastteil** | **Nutzlastteil** |
| D1-D216 | Nutzlast oder Füll-Muster oder FN/TA-Werte (Leer-Übertragungsrahmen) | Nutzlast oder Füll-Muster oder FN (Leer-Übertragungsrahmen) |
| | **Zeitliche Ausrichtung und CRC** | **Zeitliche Ausrichtung und CRC** |

## Patentansprüche

1. Verfahren zum Steuern einer von einer Ressourcen-Verwaltungseinrichtung (BSC, PCU) abgesetzten autonomen Sende- und/oder Empfangseinrichtung (BTS) in einer Funkzelle (Z), wobei
- von der Ressourcen-Verwaltungseinrichtung (BSC) in einem Abwärtsverbindungs-Datenpaket (DLP) aus einem Kopfabschnitt (H) und aus einem Daten- und/oder Steuerinformationsabschnitt (Daten) und mit einer zelleindeutigen Identifizierungsinformation eine Steuerinformation über die Sende- und/oder Empfangseinrichtung (BTS) und über eine Funk-Schnittstelle (V) zu einer teilnehmerseitigen Station (MS) in der Zelle (Z) gesendet wird,
- von der teilnehmerseitigen Station (MS) ein Aufwärtsverbindungs-Datenpaket (ULP) aus einem Kopfabschnitt (H) und einem Daten- und/oder Steuerinformationsabschnitt (Daten) und mit einer eindeutigen Identifikationsinformation zu der Sendeund/oder Empfangseinrichtung (BTS) gesendet wird und
- von der Sende- und/oder Empfangseinrichtung (BTS) das Aufwärtsverbindungs-Datenpaket (ULP) von der teilnehmerseitigen Station (MS) verarbeitet und zu der Ressourcen-Verwaltungseinrichtung (BSC) weitergeleitet wird, falls zumindest eine vorgegebene Empfangsbedingung (IR) für das Aufwärtsverbindungs-Datenpaket (ULP) erfüllt ist,
- **dadurch gekennzeichnet , dass**
- das Abwärtsverbindungs-Datenpaket (DLP*) und das Aufwärtsverbindungs-Datenpaket (ULP*) jeweils um eine zusätzliche Steuerinformation (ZID bzw. ZIU) erweitert auf der Übertragungsstrecke zwischen der Ressourcen-Verwaltungseinrichtung (BSC) und der Sende- und/oder Empfangseinrichtung (BTS) übertragen werden und
- die Sende- und/oder Empfangseinrichtung (BTS) das von der teilnehmerseitigen Station (MS) empfangene Aufwärtsverbindungs-Datenpaket (ULP) gemäß einer solchen zuvor von der Ressourcen-Verwaltungseinrichtung (BSC) im Abwärtsverbindungs-Datenpaket (DLP*) empfangenen zusätzlichen Steuerinformation (ZID) verarbeitet.

2. Verfahren nach Anspruch 1, bei dem
die zusätzliche Steuerinformation (ZID bzw. ZIU) auf der Funk-Schnittstelle (V) weggelassen wird.

3. Verfahren nach Anspruch 1 oder 2, bei dem
zur Aufnahme der zusätzlichen Steuerinformation (ZID bzw. ZIU) das Aufwärtsverbindungs-Datenpaket (ULP) bzw. das Abwärtsverbindungs-Datenpaket (DLP) bezüglich deren Länge erweitert werden.

4. Verfahren nach einem vorstehenden Anspruch, bei dem
die zusätzliche Steuerinformation (ZID bzw. ZIU) im Aufwärtsverbindungs-Datenpaket (ULP) bzw. im Abwärtsverbindungs-Datenpaket (DLP) eine zelleindeutige teilnehmerstationsspezifische Identifizierungsinformation enthält.

5. Verfahren nach einem vorstehenden Anspruch, bei dem
die Steuerinformation (ZID) auf einen Zustandsparameter für die Verarbeitung in der Sende- und/oder Empfangseinrichtung (BTS) bezogen ist und mit der zusätzlichen Steuerinformation (ZIU) des Aufwärtsverbindungs-Datenpakets (ULP*) der Ressourcen-Verwaltungseinrichtung (BSC) eine Zustandsinformation über den Betriebsparameter übertragen wird.

6. Verfahren nach einem vorstehenden Anspruch, bei dem
ein eindeutiger zeitlicher Zusammenhang zwischen einem insbesondere von der Sende- und/oder Empfangseinrichtung (BTS) empfangenen Abwärtsverbindungs-Datenpaket (DLP*) und einem insbesondere nachfolgend von einer teilnehmerseitigen Station empfangenen Aufwärtsverbindungs-Datenpaket (ULP) liegt, wobei dieser zeitliche Zusammenhang insbesondere aus der Zeiteinteilung der Luftschnittstelle abgeleitet werden kann.

7. Verfahren nach einem vorstehenden Anspruch, bei dem
die vorgegebene Empfangsbedingung für das Aufwärtsverbindungs-Datenpaket (ULP) zur Überprüfung des korrekten Empfangs verwendet wird, wobei bei nicht korrektem Empfang eine Anforderung zu einer weiteren, insbesondere wiederholten Übertragung von der Sende- und/oder Empfangseinrichtung (BTS) an die teilnehmerseitigen Station (MS) gesendet wird.

8. Verfahren nach einem vorstehenden Anspruch, bei dem
bei nicht korrektem Empfang des Aufwärtsverbindungs-Datenpakets (ULP) in der Sende- und/oder Empfangseinrichtung (BTS) das empfangene Aufwärtsverbindungs-Datenpaket (ULP) in einem Speicher (M) zur späteren bedarfsweisen Verarbeitung abgespeichert wird.

9. Verfahren nach einem vorstehenden Anspruch, bei dem
bei nicht korrektem Empfang des Aufwärtsverbindungs-Datenpakets (ULP) in der Sende- und/oder Empfangseinrichtung (BTS) durch diese von der teilnehmerseitigen Station (MS) eine redundante Übertragung angefordert wird, wobei zumindest eine solche zusätzliche Steuerinformation (ZIU, ZID) auf die Steuerung der Verarbeitung ursprünglich empfangener und redundant empfangener Aufwärtsverbindungs-Datenpakete (ULP) bezogen ist.

10. Verfahren nach einem vorstehenden Anspruch, bei dem
bei nicht korrektem Empfang des Aufwärtsverbindungs-Datenpakets (ULP) in der Sende- und/oder Empfangseinrichtung (BTS) durch diese von der teilnehmerseitigen Station (MS) eine decodierte Übertragung angefordert wird, wobei zumindest eine solche zusätzliche Steuerinformation (ZIU, ZID) auf die Steuerung der Verarbeitung ursprünglich empfangener und decodierter empfangener Aufwärtsverbindungs-Datenpakete (ULP) bezogen ist.

11. Verfahren nach einem vorstehenden Anspruch, bei dem
die zusätzliche Steuerinformation (ZIU, ZID) zur Speicherverwaltung der Sende- und/oder Empfangseinrichtung (BTS) verwendet wird und/oder zur Information der Ressourcen-Verwaltungseinrichtung (BSC) an diese übertragen wird.

12. Verfahren nach einem vorstehenden Anspruch, bei dem
die zusätzliche Steuerinformation (ZID) zur Speicherverwaltung der Sende- und/oder Empfangseinrichtung (BTS) verwendet wird, wobei damit Belegungs- und/oder Freigabeanweisungen von der Ressourcen-Verwaltungseinrichtung (BSC) bezüglich eines Speichers (M) der Sende- und/oder Empfangseinrichtung (BTS) an diese übertragen werden.

13. Verfahren nach einem vorstehenden Anspruch, bei dem
die zusätzliche Steuerinformation (ZIU, ZID) zur Übertragung von Richtungsinformation bezüglich einer Richtantenne der Sende- und/oder Empfangseinrichtung (BTS) verwendet wird.

14. Verfahren nach einem vorstehenden Anspruch, bei dem
die zusätzliche Steuerinformation (ZIU, ZID) in der Sendeund/oder Empfangseinrichtung zur Berechnung und Übertragung von Lokalisierungsdaten einer teilnehmerseitigen Station (MS) in der Zelle verwendet wird.

15. Verfahren nach einem vorstehenden Anspruch, bei dem
die Übertragung des um die zusätzliche Steuerinformation (ZIU, ZID) erweiterten Aufwärtsverbindungs-Datenpakets (ULP*) bzw. Abwärtsverbindungs-Datenpakets (DLP*) inbandig zwischen der Ressourcen-Verwaltungseinrichtung (BSC) und der Sendeund/oder Empfangseinrichtung (BTS) durchgeführt wird, insbesondere verbindungsorientiert (VN) durchgeführt wird.

16. Verfahren nach einem vorstehenden Anspruch, bei dem
in der Sende- und/oder Empfangseinrichtung (BTS) unter Einbezug der zusätzlichen Steuerinformation (ZID, ZIU) eine eigenständige, autonome Durchführung inkrementeller Redundanz durchgeführt wird.

17. Verfahren nach einem vorstehenden Anspruch, bei dem
in der Sende- und/oder Empfangseinrichtung (BTS) unter Einbezug der zusätzlichen Steuerinformation (ZID, ZIU) eine eigenständige, autonome Durchführung einer Richtantennenausrichtung auf Teilnehmer durchgeführt wird.

18. Sende- und/oder Empfangseinrichtung (BTS) eines Kommunikationssystems, insbesondere zum Durchführen eines Verfahrens nach einem der Ansprüche 1 bis 17, mit
- einer Sende- und/oder Empfangseinrichtungs-Steuereinrichtung (C) zum Steuern von deren Betriebsablauf und Verarbeiten empfangener und zu versendender Datenpakete (ULP, ULP*, DLP, DLP*),
- einer ersten Schnittstelle zum Übertragen der Datenpakete zu einer teilnehmerseitigen Station (MS) über eine Funk-Schnittstelle (V) und
- einer zweiten Schnittstelle (VN) zum Übertragen der Datenpakete und von Steuerinformationen zu einer Ressourcen-Verwaltungseinrichtung (BSC, PCU) des Kommunikationssystems,
**dadurch gekennzeichnet , dass**
die Sende- und/oder Empfangseinrichtungs-Steuereinrichtung (C) ausgelegt ist, ein von der teilnehmerseitigen Station (MS) empfangenes Aufwärtsverbindungs-Datenpaket (ULP) um eine zusätzliche Steuerinformation (ZIU) zu ergänzen und als ergänztes Aufwärtsverbindungs-Datenpaket (ULP*) mit dieser ergänzten Steuerinformation (ZIU) an die Ressourcen-Verwaltungseinrichtung (BSC) weiterzuleiten.

19. Ressourcen-Verwaltungseinrichtung (BSC, PCU) eines Kommunikationssystems, insbesondere zum Durchführen eines Verfahrens nach einem der Ansprüche 1 bis 17, mit
einer Ressourcen-Verwaltungseinrichtungs-Steuereinrichtung (PCU) zum übergeordneten Steuern des Betriebs von angeschlossenen der Sende- und/oder Empfangseinrichtungen (BTS) und zum Verwalten von Ressourcen auf einer Funk-Schnittstelle (V) zwischen der Sende- und/oder Empfangseinrichtung (BTS) und einer teilnehmerseitigen Station (MS)
**dadurch gekennzeichnet , dass**
die Ressourcen-Verwaltungseinrichtung (BSC) ausgelegt ist, ein an die Sende- und/oder Empfangseinrichtung (BTS) zu übertragendes Abwärtsverbindungs-Datenpaket (DLP) um eine zusätzliche Steuerinformation (ZID) zu ergänzen und als ergänztes Abwärtsverbindungs-Datenpaket (DLP*) mit dieser ergänzten Steuerinformation (ZID) an die Sende- und/oder Empfangseinrichtung (BTS) zu deren Steuerung weiterzuleiten.

20. Verfahren, Sende- und/oder Empfangseinrichtung (BTS) bzw. Ressourcen-Verwaltungseinrichtung (BSC) nach einem vorstehenden Anspruch,
ausgelegt für ein Kommunikationssystem gemäß dem Standard General System for Mobile Communications (GSM), insbesondere gemäß dem Standard Enhanced Data Rates for GSM Evolution (EDGE) und/oder Enhanced General Packet Radio Services (EGPRS).
